# EUROPÄISCHE PATENTSCHRIFT

(11) **EP 3 240 129 B1**
(45) Veröffentlichungstag und Bekanntmachung des Hinweises auf die Patenterteilung: **20.12.2023**
(21) Anmeldenummer: 17168487.1
(22) Anmeldetag: 27.04.2017
(51) Int. Cl.: H02G 3/04, F16L 3/26, H02G 3/34, H02G 3/38

(54) **MEDIENVERSORGUNGSSYSTEM**
SYSTEM FOR SUPPLYING MEDIA
SYSTÈME D'ALIMENTATION

(30) Priorität: 27.04.2016 DE 102016005100
(43) Veröffentlichungstag der Anmeldung: 01.11.2017
(73) Patentinhaber: arc2lab GmbH, 80995 München (DE)
(72) Erfinder: SCHNITZER, Christian Georg, 80995 München (DE)
(74) Vertreter: Isarpatent

(56) Entgegenhaltungen:
- EP-A1- 0 248 696
- EP-A2- 0 200 927
- DE-A1- 19 848 525
- DE-B- 1 236 621
- US-B1- 7 679 007

## Beschreibung

Die Erfindung betrifft ein Medienversorgungssystem. Insbesondere betrifft die Erfindung ein flexibles horizontales und ein flexibles vertikales Medienversorgungssystem, welches jeweils im Baukastensystem aufgebaut sein kann.

Die DE 12 36 621 B offenbart ein Medienversorgungssystem zur Leitungsführung und Entnahme von elektrischen Medien, Sanitärmedien und Gasmedien, das Medienversorgungssystem umfassend: einen Grundkörper bestehend aus einem ersten Profil und aus einem zweiten Profil, einen Quersteg, einen ersten Enddeckel und einen zweiten Enddeckel, wobei die Profile dazu eingerichtet sind, mit den Enddeckeln, so verbunden zu werden, dass der erste Enddeckel mit den Profilen fest verbunden ist, und dass der zweite Enddeckel mit den Profilen fest verbunden ist. Der Quersteg, der erste und der zweite Enddeckel und das erste und das zweite Profil sind jeweils separat ausgebildet sind, wobei der Quersteg so ausgebildet ist, dass der Quersteg in einem Inneren eines Kanals des Medienversorgungssystems mit dem ersten Profil und dem zweiten Profil verbindbar ist, so dass der Quersteg das erste Profil und das zweite Profil miteinander verbindet, wobei das Medienversorgungssystem ferner ein Erweiterungsprofil aufweist, welches mit dem ersten Profil und mit dem ersten Enddeckel verbindbar ist.

Die EP 0 200 927 A2 offenbart ein Kabelkanalprofil zur Verlegung von Installationsleitungen oder dergleichen mit einem U-förmigen Kanalkörper, dessen von den Kanalwänden gebildete Installationsöffnung von einem Deckel verschlossen ist, der an den Enden der Kanalwände insbesondere außen befestigt ist, wobei die Kanalwände und der Boden des Kanalkörpers lösbar miteinander verbunden und gegen abweichend dimensionierte Wände und/oder Böden austauschbar sind.

Die DE 198 48 525 A1 offenbart einen Bausatz für Kabelkanäle eines Arbeitsplatz-Möbels, bestehend aus mehreren unterschiedlichen, zusammensteckbaren Profilabschnitten, die im wesentlichen ebene Außenseiten aufweisen und auf den Innenseiten angeformte Verbindungsstege oder -nuten tragen, der vier verschiedene Profilabschnitte umfaßt:
a) Wannen-Profilabschnitte mit U-förmigem Querschnitt, wobei die Seitenschenkel in Steckstege oder Stecknuten auslaufen und an den Übergängen zum Basisschenkel Stecknuten oder Steckstege bilden, deren Steckrichtungen in der Ebene der Seitenschenkel ausgerichtet sind,
b) im wesentlichen ebene Seitenwand-Teilprofilabschnitte mit Stecknut an der einen und Stecksteg an der anderen Längskante, deren Steckrichtungen in der Ebene der Seitenwand-Teilprofilabschnitte ausgerichtet sind,
c) im wesentlichen ebene Wandabschluß-Profilabschnitte mit Stecknut oder Stecksteg an der einen und Scharnieraufnahme an der anderen Längskante, wobei die Steckrichtung der Stecknut oder des Stecksteges in der Ebene des Wandabschluß-Profilabschnittes ausgerichtet ist, und
d) im wesentlichen ebene Deckel-Profilabschnitte mit einem Scharniersteg an einer Längskante.

Die vorliegende Erfindung ist auf die Einrichtung von Arbeitsplätzen im Labor-, Technika- und Schulbereich gerichtet, wobei eine Versorgung oder eine Entsorgung mit Medien insbesondere über eine Medienzelle, eine Mediensäule oder eine Medienampel erfolgt. Moderne Laborarbeitsplätze müssen heute unter Gesichtspunkten eines Lebenszyklus' einer Vielzahl von Anforderungen genügen. Zu versorgende Labormedien können beispielsweise wässrige Medien sein, z.B. Trinkwasser, Betriebswasser, Flusswasser, Brunnenwasser, Berieselungswasser, Kühlwasservorlauf und Kühlwasserrücklauf, Wasserdampf, Kondensat, vollentsalztes Wasser, destilliertes Wasser oder Reinstwasser. Zu versorgende Labormedien können beispielsweise auch technische Gase sein, z.B. Brenngas oder Druckluft. Weiterhin kommen als zu versorgende Labormedien auch Reingase oder Reinstgase in Betracht, z.B. brennbare Gase, nicht-brennbare Gase, verbrennungsfördernde Gase, toxische Gase oder korrosive Gase. Weiterhin kann auch ein Vakuum als zu versorgendes Labormedium vorgesehen sein, z.B. ein Grobvakuum, ein Feinvakuum oder ein Hochvakuum.

Weiterhin können auch insbesondere elektrische Anschlüsse durch das Medienversorgungssystem bereitgestellt werden, z.B. Anschlussdosen (-110V / -120V / ∼127 V / -220 V/ -230 V/ -240 V) für Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+ F (CEE /7/), Stecker-Typ G (BS 1363) "Commonwealth-Stecker", Stecker-Typ H (SI-32), Stecker-Typ I (AS 3112), Stecker-Typ J (SEV 1011), Stecker-Typ K (DS 60884-2-D1), Stecker-Typ L (CEI 23-50), Stecker-Typ M (BS 546, 15-A) und Stecker-Typ N (IEC 60906-1).

Auch Anschlussdosen mit 400V können vorgesehen sein, z.B. CEE 7/3 deutsche Schukosteckdose (Typ F), CEE 7/4 deutscher Schukostecker (Typ F), CEE 7/5 französische Steckdose (Steckdose Typ E), französischer Stecker (Stecker-Typ E), CEE 7/7 Vereinigung von Stecker-Typ E und Schuko (Typ F), CEE 7/16 Eurostecker (Stecker-Typ C) oder CEE 7/17 Konturenstecker. Ferner kann über ein Medienversorgungssystem auch das Folgende bereitgestellt werden: Sicherheitsstrom-Versorgung / SV-Netz, Netzersatzversorgung NEA, Potenzialausgleich, Kleinverteiler mit Fehlerstromschutzschalter und Absicherungen sowie Datenleitungen/Telefonleitungen.

Aus der EP 0 800 865 A2 ist bekannt, wie entsprechende Anwendungen in Arbeitsplätze eingebaut sein können. Besonders im Hinblick auf eine Versorgung mit Medien in modernen und flexiblen Laborlandschaften sind herkömmliche Systeme wenig geeignet, diese Anforderungen zu erfüllen. Dabei können Versorgungssysteme in Aufbaumontage oder Einbaumontage ausgeführt werden. Weiterhin sind Wandsysteme üblicherweise entweder vorhanden oder können bei einer nachträglichen Notwendigkeit ergänzt werden. Weiterer Stand der Technik ist aus den Druckschriften DE 10 2009 002 454 A1, DE 10 2010 049 219 A1, DE 20 2005 001 264 U1, DE 10 2010 056 066 A1 und der EP 2 555 361 A1 bekannt. Aus dem Stand der Technik sind weiterhin vertikale Mediensäulen und horizontale Medienkanäle bekannt, welche jeweils in ihrer Grundabmessung bzw. in ihrer Tiefe nicht erweitert bzw. nicht angebaut werden können. Ein Grundkörper derartiger Mediensäulen weist dabei entweder eine von vornherein entsprechende Größe auf, die eine mehrseitige Medienversorgung ermöglicht, oder aber es wird bei einer beidseitigen Entnahme die Mediensäule gespiegelt erneut vorgesehen. Bei horizontalen Medienkanälen werden ebenso bei beidseitigen Entnahmen die Medienkanäle gespiegelt erneut angeordnet.

Es ist eine Aufgabe der vorliegenden Erfindung, ein Medienversorgungssystem bereitzustellen, welches ermöglicht, individuell auf die unterschiedlichen Anforderungen an einem Arbeitsplatz zu reagieren.

Die Aufgabe wird gelöst durch den Gegenstand des unabhängigen Patentanspruchs 1, vorteilhafte Ausführungsformen sind Gegenstand der Unteransprüche.

Gemäß der Erfindung wird ein Medienversorgungssystem zur Leitungsführung und Entnahme von vorstehend beschriebenen elektrischen Medien, Sanitärmedien und Gasmedien, insbesondere in unterschiedlicher Zusammensetzung, bereitgestellt. Das Medienversorgungssystem wird im Folgenden teilweise auch mit den Begriffen "Säule", "Mediensäule" oder "Grundkanal" bezeichnet.

Das Medienversorgungssystem umfasst einen Grundkörper bestehend aus einem ersten Profil und aus einem zweiten Profil. Diese Profile werden im Folgenden auch mit dem Begriff "Grundprofil" bezeichnet. Das erste Profil und das zweite Profil können insbesondere jeweils eine Breite bzw. eine Tiefe von 100 mm oder eine Breite bzw. Tiefe von 150 mm aufweisen. Somit können die Profile eine unterschiedliche Breite/Tiefe aufweisen. Das erste Profil und das zweite Profil liegen einander insbesondere gegenüber. Weiterhin umfasst das Medienversorgungssystem einen Quersteg oder mehrere Querstege, die insbesondere parallel zueinander angeordnet sein können, einen ersten Enddeckel, z.B. einen frontseitigen Enddeckel, und einen zweiten Enddeckel, z.B. einen rückseitigen Enddeckel. Die Enddeckel können auch "Kopfplatte", "Fußplatte", "Frontdeckel" oder "Deckel" genannt werden und können in ihrer Größe angepasst werden, d.h. sie sind in ihrer Größe anpassungsfähig. Weiterhin können die Enddeckel insbesondere aus mehreren einzelnen Teilen bestehen, welche in einer Längsrichtung des Medienversorgungssystems aneinandergereiht sein können.

Der Quersteg verbindet das erste Profil und das zweite Profil miteinander. Der Quersteg wird im Folgenden teilweise auch mit dem Begriff "Querprofil" bezeichnet. Insbesondere kann der Quersteg das erste Profil und das zweite Profil auf Abstand zueinander halten. Weiterhin kann der Quersteg, welcher insbesondere durch ein Blech gebildet werden kann, geschlitzt ausgeführt sein. Der Quersteg kann ferner insbesondere derart ausgebildet sein, dass er zwischen sich und dem ersten Enddeckel einen ersten Kanal definiert, und dass er zwischen sich und dem zweiten Enddeckel einen zweiten Kanal definiert, wobei der erste Kanal von dem zweiten Kanal durch den Quersteg getrennt sein kann. Durch das Ausbilden des ersten Kanals und des zweiten Kanals wird eine getrennte Medienführung insbesondere für elektrische Medien, Sanitärmedien und Gasmedien ermöglicht. In diesem Sinne kann der Quersteg einen Berührungsschutz bilden, welcher insbesondere elektrische Leitungen innerhalb des ersten Kanals von Sanitär- oder Gasleitungen innerhalb des zweiten Kanals trennt.

Weiterhin sind die Profile dazu eingerichtet sind, mit den Enddeckeln und/oder mit mindestens zwei auf einer Seite paarweise angeordneten Erweiterungsprofilen verbunden zu werden. Dabei ist der erste Enddeckel mit den Profilen oder mit den Erweiterungsprofilen fest verbunden (insbesondere entnahmeseitig sowie mit und ohne Medienbestückung), und der zweite Enddeckel ist mit den Profilen oder - sofern vorhanden - mit zwei anderen Erweiterungsprofilen fest verbunden. Je nach Anforderung und Bestückung kann die Bauteilhöhe der Enddeckel variieren. Bei einer einseitigen Entnahme kann die Gegenentnahmeseite mit einem Deckel verschlossen werden.

Mit anderen Worten können das erste Profil, das zweite Profil, der Quersteg, der erste Deckel und der zweite Deckel derart fest miteinander verbunden werden, insbesondere miteinander verschraubt werden, dass sie eine Einheit bilden. Zu dieser Einheit können insbesondere auch zwei einander gegenüberliegende und somit paarweise angeordnete Erweiterungsprofile gehören, welche zwischen den einander gegenüberliegenden Profilen und einem der Deckel eingefügt werden können. Dieses Einfügen kann auf einer Seite neben den Profilen erfolgen oder auf beiden Seiten neben den Profilen. Durch das Einfügen der Erweiterungsprofile kann insbesondere der erste Kanal und/oder der zweite Kanal insbesondere zur einseitigen oder beidseitigen Medienentnahme in seiner Tiefe besonders schnell einseitig oder beidseitig erweitert werden.

Ein Kern der Erfindung liegt somit darin, dass der Grundkörper und damit auch das gesamte Medienversorgungssystem insbesondere in seiner Tiefe durch mindestens auf einer Seite paarweise neben den Grundprofilen angeordnete Erweiterungsprofile erweitert werden kann. Insbesondere weisen die Erweiterungsprofile dazu jeweils eine halbradiusförmig ausgebildete Profilnase aufweisen, welche in ein dafür vorbereitetes Gegenstück bzw. eine korrespondierende Aufnahme in dem Grundkörper eingeschwenkt werden kann. Weiterhin kann das jeweilige Erweiterungsprofil insbesondere über Rastelemente bzw. über eine Raste an dem Grundkörper bzw. an dem betreffenden Profil arretiert werden. Die vorliegende Erfindung ermöglicht, dass eine einseitige Entnahmesituation schnell zu einer beidseitigen Medienentnahme erweitert werden kann. Weiterhin kann ein Umbau bzw. eine Erweiterung der Medienversorgung beim Nutzer bzw. beim Kunden in einfachster Montage erfolgen. Die Dimensionen bzw. das Baumaß des Medienversorgungssystems kann insbesondere derart gewählt werden, dass ein Verbauen in standardisierten Bausystemen, wie z.B. in einem System- und Trockenbausystem, ermöglicht wird. Weiterhin kann das Medienversorgungssystem mit Aufbauprofilen zur Aufnahme neuer Medien erweitert werden.

Gemäß einer Ausführungsform ist vorgesehen, dass der Grundkörper in seiner Breite verändert werden kann, indem eine Längenanpassung des Querprofils sowie der Enddeckel vorgenommen wird. Beispielsweise können Querprofile und Enddeckel mit unterschiedlichen Längen bereitgestellt werden, und diese Querprofile und Enddeckel können je nach Erfordernis in der vorstehend beschriebenen Weise in das Medienversorgungssystem eingebaut werden, sodass die Breite des Medienversorgungssystems angepasst werden kann. Mit anderen Worten kann vorgesehen sein, dass der Grundkörper, welcher aus gegenüberliegenden Grundprofilen besteht, nicht nur in der Tiefe, sondern auch in der Breite verändert werden kann, und zwar durch eine Längenanpassung der Querprofile/Querwände sowie der Enddeckel, insbesondere der Frontdeckel bzw. Rückendeckel. Der Vorteil ist dabei ein modularer Aufbau im Baukastenform.

Gemäß einer weiteren Ausführungsform ist vorgesehen, dass das Medienversorgungssystem vertikal angeordnet ist, und dass das Medienversorgungssystem weiterhin eine massive Kopfplatte aufweist, welche dazu eingerichtet ist, den Grundkörper an einem Deckenraster, an einem Tragraster oder an einer Einzelpunktaufhängung zu befestigen. Der Vorteil dieser Ausführungsform liegt insbesondere darin, dass bei einer beidseitigen Entnahme eine Symmetrie zum Tragsystem im Deckenbereich ermöglicht wird.

Weiterhin kann die Kopfplatte mit Lagereinheiten und mit einer Rollenführung ausgestattet sein, wodurch sich das gesamte Medienversorgungssystem in Führungsschienen, welche in ein Tragraster eingesetzt werden können, verschieben lässt. Der Vorteil dieser Ausgestaltung ist insbesondere die Möglichkeit einer individuellen Anpassung an die jeweiligen Anforderungen aus der Nutzung mit dem Medienversorgungssystem.

Gemäß einer weiteren Ausführungsform ist vorgesehen, dass eine Führung von Zuleitungen in dem Grundkörper entweder in einer einseitigen Entnahmesituation in einem hinteren Bereich erfolgt, oder in einer beidseitigen Entnahmesituation mittig unter zwei getrennten Tragprofilen erfolgt. Diese Ausführungsform ermöglicht, dass ein Bereich vor den Tragprofilen bzw. vor den Quertragprofilen somit nicht mehr mit Installationen verbaut ist, welche ein Verfahren des Medienversorgungssystems bzw. der Mediensäule einschränken könnten. Ein Vorteil dieser Ausführungsform liegt insbesondere darin, dass eine einfachere Montage von Leitungsführungen ermöglicht wird.

Weiterhin kann sich der Grundkörper direkt unter einem Tragprofil eines Deckenrasters oder eines Tragrasters anschließen. Ein Vorteil dieser Ausgestaltung ist insbesondere eine bessere Einleitung von Querkräften aus der Säule in das Deckenraster.

Gemäß einer weiteren Ausführungsform ist vorgesehen, dass der Grundkörper bei einer einseitigen Anordnung oder bei einer zweiseitigen Anordnung sowie bei einer vertikalen und bei einer horizontalen Doppelentnahmesituation immer symmetrisch bleibt. Ein Vorteil dieser Ausgestaltung besteht insbesondere darin, dass eine gleichmäßige Einleitung von Krafteinflüssen in das Deckenraster ermöglicht wird.

Weiterhin ist vorteilhaft vorgesehen, dass ein Erweiterungsprofil bzw. ein Zusatzprofil (welches in unterschiedlicher Tiefe bereitgestellt werden kann) mit einem der Profile und mit einem frontseitigen Enddeckel verbunden ist, und dass der frontseitige Enddeckel mit dem anderen der Profile verbunden ist, sodass der frontseitige Enddeckel abgeschrägt verläuft. Alle inneren Bauteile können in gerader Ausführung verbleiben. Der frontseitige Enddeckel kann dabei in abgewinkelte Form in eine Aufnahme für eine Profilnase eingeschwenkt werden, und dadurch am Grundprofil befestigt werden. Ein Vorteil dieser Ausgestaltung liegt insbesondere darin, dass eine schnelle Montage ermöglicht wird und eine einfache statische Verbindung zum Grundprofil hergestellt werden kann.

Weiterhin kann vorgesehen sein, dass ein Erweiterungsprofil bzw. ein Zusatzprofil (welches in unterschiedlicher Tiefe bereitgestellt werden kann) mit einem der Profile und mit einem rückseitigen Enddeckel verbunden ist, und dass der rückseitige Enddeckel mit dem anderen der Profile verbunden ist, sodass der rückseitige Enddeckel abgeschrägt verläuft. Diese Ausführungsform ermöglicht, dass mittels des Erweiterungsprofils bzw. mittels des Zusatzprofils eine Abschrägung eines rückwärtigen Bereichs zur Medienentnahme zum modularen Aufbau von abgesaugten Sicherheitseinrichtungen und Abzügen bereitgestellt werden kann. Eine Bedienseite kann in diesem Fall außerhalb der Sicherheitseinrichtungen angeordnet sein. Ein frontseitiger Enddeckel kann gemäß dieser Ausführungsform insbesondere in abgewinkelter Form in eine korrespondierende Aufnahme für eine Profilnase eingeschwenkt und am Grundprofil befestigt werden. Ein Vorteil dieser Ausführungsform liegt insbesondere darin, dass ein Medienversorgungssystem geschaffen werden kann, welches multifunktional nutzbar und erweiterbar ist.

Weiterhin kann vorteilhaft vorgesehen sein, dass innerhalb des Medienversorgungssystems ein Grundkanal gebildet wird, welcher als reiner einseitiger oder beidseitiger Elektrokanal ohne einen inneren Berührungsschutz ausgeführt ist. Ein Vorteil dieser Ausführungsform liegt insbesondere darin, dass eine bessere Nutzung mit einer Erweiterbarkeit für spätere Anforderungen an Wasser und Gase ermöglicht wird.

Gemäß einer weiteren Ausführungsform ist vorgesehen, dass das Medienversorgungssystem Trennstege aufweist, welche dazu eingerichtet sind, eine Leitungsführung von Medien innerhalb eines Grundkanals innerhalb des Medienversorgungssystems abzuschotten. Ein Vorteil dieser Ausgestaltung liegt insbesondere darin, dass eine einfache und wirkungsvolle Umsetzung getrennter Leitungsführungen ermöglicht wird.

Bevorzugt weisen die Profile bzw. die Grundprofile eine Tiefe von 100 mm oder 150 mm auf. Dementsprechend weist auch der Grundkörper des Medienversorgungssystems eine entsprechende Tiefe auf. Die Ergänzungsprofile ermöglichen bevorzugt eine weitere Vertiefung um 50 mm. Die bevorzugte Breite des Medienversorgungssystems insgesamt beträgt insbesondere 180 mm, kann jedoch erweitert werden. Ein Vorteil dieser Ausgestaltung liegt insbesondere darin, dass ein Medienversorgungssystem geschaffen werden kann, welches multifunktional nutzbar und erweiterbar ist.

Die Enddeckel können mit verschiedenen Fertigungsmethoden hergestellt werden. Der Vorteil dieser Ausgestaltung liegt insbesondere darin, dass ein Medienversorgungssystem geschaffen werden kann, welches kostengünstig an die individuellen Anfordernisse des Nutzers angepasst werden kann.

Die Enddeckel können weiterhin aus verschiedenen Werkstoffen hergestellt sein, insbesondere aus Stahl, Aluminium, Kunststoff oder Glas. Der Vorteil dieser Ausgestaltung liegt insbesondere darin, dass ein Medienversorgungssystem geschaffen werden kann, welches kostengünstig an die individuellen Anforderungen des Nutzers angepasst werden kann. Ebenfalls können die Enddeckel durch eine geeignete Materialauswahl an eine Auswahl von Medienentnahmen und deren Anzahl angepasst werden.

Weiterhin kann insbesondere ein frontseitiger Enddeckel in geometrischer Form halbrund, abgewinkelt und in dreieckiger Form ausgebildet sein. Dadurch kann insbesondere eine abwechslungsreiche Gestaltung am Arbeitsplatz im Labor ermöglicht werden.

Es kann vorgesehen werden, dass das Medienversorgungssystem Sanitär- und Gasentnahmestellen aufweist, welche einzeln auf frontseitigen Enddeckeln montiert sind. Der Vorteil dieser Ausgestaltung liegt insbesondere darin, dass eine individuelle Anpassungsmöglichkeit geschaffen wird, die aus den Erfordernissen der einzelnen Entnahmesituationen entsteht.

Es kann vorgesehen werden, dass ein Arbeitsplatz gemäß DIN EN 13150 mit einem Medienversorgungssystem gemäß der Erfindung Mittel aufweist, welche gute Eigenschaften für einen Nassarbeitsplatz und einen installierten Spritzschutz zum gegenüberliegenden Arbeitsplatz nach BGFGUV-I 850-0 ermöglichen. Ein Vorteil dieser Ausgestaltung liegt insbesondere darin, dass eine einfache und kostengünstige Anpassung mit Schraubmontage an Systeme ermöglicht wird, welche Querkräfte und Längskräfte in Deckensysteme oder Wandsysteme einleiten können. Ferner kann vorgesehen sein, dass das Medienversorgungssystem dazu eingerichtet ist, insbesondere in allen üblichen Wandsysteme mit Stärken von 100 mm, 150 mm, 200 mm oder 250 mm eingebaut zu werden. Ein Vorteil dieser Ausgestaltung liegt insbesondere darin, dass eine grundsätzlich mögliche Erweiterbarkeit bei höherer Bestückung mit Medienentnahmen bereitgestellt wird.

Ein Medienversorgungssystem gemäß der Erfindung kann in einem Labor verwendet werden, und zwar sowohl als horizontales Medienversorgungssystem (insbesondere an Zellen / Wänden / Mitteltischen aufgeständert / an Mitteltischen aufgehängt oder frei im Raum auch in Wänden und Wandsystemen) als auch als vertikales Medienversorgungssystem (insbesondere an, vor oder über Zellen / Wänden / Mitteltischen aufgeständert / Mitteltischen abgehängt oder frei im Raum auch in Wänden und Wandsystemen vertikal hängend und stehend auch klappbar und verschiebbar ausgeführt). Der Vorteil dieser Ausgestaltung der Erfindung ist insbesondere, dass ein Medienversorgungssystem geschaffen werden kann, welches multifunktional nutzbar ist und erweiterbar ist.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, sodass die in dem Anwendungsgebiet bekannten Auswahlkriterien uneingeschränkt Anwendung finden können. Im Folgenden werden Ausführungsbeispiele der Erfindung anhand der schematischen Zeichnung näher erläutert. Hierbei zeigt
- Fig. 1: eine Draufsicht eines Grundprofils mit 100 mm Tiefe für ein Medienversorgungssystem gemäß der vorliegenden Erfindung,
- Fig. 2: eine Draufsicht eines Grundprofils mit 150 mm Tiefe für ein Medienversorgungssystem gemäß der vorliegenden Erfindung,
- Fig. 3: eine Draufsicht eines Ergänzungsprofils mit 50 mm Tiefe für ein Medienversorgungssystem gemäß der vorliegenden Erfindung,
- Fig. 4: eine Draufsicht eines Grundprofils ausgeführt als Sonderprofil für ein Medienversorgungssystem gemäß der vorliegenden Erfindung,
- Fig. 5: eine Draufsicht eines Grundkanals bzw. eines Medienversorgungssystems mit 100 mm Tiefe, welches nicht Gegenstand der vorliegenden Erfindung ist,
- Fig. 6: eine Draufsicht eines Grundkanals bzw. eines Medienversorgungssystems mit 100 mm Tiefe und mit einer einseitigen Erweiterung um 50 mm gemäß einer ersten Ausführungsform der vorliegenden Erfindung,
- Fig. 7: eine Draufsicht eines Grundkanals bzw. eines Medienversorgungssystems mit 100 mm Tiefe mit einer zweiseitigen Erweiterung um jeweils 50 mm gemäß einer zweiten Ausführungsform der vorliegenden Erfindung,
- Fig. 8: eine Draufsicht eines Grundkanals bzw. eines Medienversorgungssystems mit 150 mm Tiefe, welches nicht Gegenstand der vorliegenden Erfindung ist,
- Fig. 9: eine Draufsicht eines Grundkanals bzw. eines Medienversorgungssystems mit 150 mm Tiefe mit einer zweiseitigen Erweiterung um jeweils 50 mm gemäß einer dritten Ausführungsform der vorliegenden Erfindung,
- Fig. 10: eine Draufsicht eines Medienversorgungssystems mit zwei Sonderprofilen nach Fig. 4 und mit zwei Paaren Erweiterungsprofilen mit jeweils 50 mm Tiefe gemäß einer vierten Ausführungsform der vorliegenden Erfindung,
- Fig. 11: eine Draufsicht eines Medienversorgungssystems mit zwei alternativen Sonderprofilen als Grundprofile mit 100 mm Tiefe, welches nicht Gegenstand der vorliegenden Erfindung ist,
- Fig. 12: eine Querschnittsdarstellung durch ein vertikales Medienversorgungssystem mit einem Grundkörper mit 100 mm Tiefe und mit einseitigen Sanitär-/ Gas- und Elektroentnahmen, welches nicht Gegenstand der vorliegenden Erfindung ist,
- Fig. 13: eine Querschnittsdarstellung durch ein horizontales Medienversorgungssystem mit einem Grundkörper mit 100 mm Tiefe und mit einseitigen Elektroentnahmen, welches nicht Gegenstand der vorliegenden Erfindung ist,
- Fig. 14: eine Querschnittsdarstellung durch ein erfindungsgemäßes vertikales Medienversorgungssystem mit einem Grundkörper mit 100 mm Tiefe, erweitert mit parallelen Ergänzungsprofilen mit 50 mm Tiefe und mit einseitigen Sanitär- *I* Gas- und Elektroentnahmen,
- Fig. 15: eine Querschnittsdarstellung durch ein erfindungsgemäßes horizontales Medienversorgungssystem mit einem Grundkörper mit 100 mm Tiefe, erweitert mit parallelen Ergänzungsprofilen mit 50 mm Tiefe und mit einseitigen Sanitär- / Gas- und Elektroentnahmen,
- Fig. 16: eine Querschnittsdarstellung durch ein erfindungsgemäßes vertikales Medienversorgungssystem mit einem Grundkörper mit 100 mm Tiefe, erweitert mit parallelen Ergänzungsprofilen mit 50 mm Tiefe und mit beidseitigen Elektroentnahmen,
- Fig. 17: eine Querschnittsdarstellung durch ein erfindungsgemäßes horizontales Medienversorgungssystem mit einem Grundkörper mit 100 mm Tiefe, erweitert mit parallelen Ergänzungsprofilen mit 50 mm Tiefe und mit beidseitigen Elektroentnahmen,
- Fig. 18: eine Querschnittsdarstellung durch ein erfindungsgemäßes vertikales Medienversorgungssystem mit einem Grundkörper mit 100 mm Tiefe, beidseitig erweitert mit parallelen Ergänzungsprofilen mit 50 mm Tiefe und mit beidseitigen Sanitär- / Gas- und Elektroentnahmen,
- Fig. 19: eine Querschnittsdarstellung durch ein erfindungsgemäßes horizontales Medienversorgungssystem mit einem Grundkörper mit 100 mm Tiefe, beidseitig erweitert mit parallelen Ergänzungsprofilen mit 50 mm Tiefe und mit beidseitigen Sanitär- / Gas- und Elektroentnahmen,
- Fig. 20: eine Querschnittsdarstellung durch ein vertikales Medienversorgungssystem mit einem Grundkörper mit 150 mm Tiefe und mit einseitigen Sanitär- / Gas- und Elektroentnahmen, welches nicht Gegenstand der vorliegenden Erfindung ist,
- Fig. 21: eine Querschnittsdarstellung durch ein horizontales Medienversorgungssystem mit einem Grundkörper mit 150 mm Tiefe und mit einseitigen Elektroentnahmen, welches nicht Gegenstand der vorliegenden Erfindung ist,
- Fig. 22: eine Querschnittsdarstellung durch ein vertikales Medienversorgungssystem mit einem Grundkörper mit 150 mm Tiefe und mit beidseitigen Elektroentnahmen, welches nicht Gegenstand der vorliegenden Erfindung ist,
- Fig. 23: eine Querschnittsdarstellung durch ein horizontales Medienversorgungssystem mit einem Grundkörper mit 150 mm Tiefe und mit beidseitigen Elektroentnahmen, welches nicht Gegenstand der vorliegenden Erfindung ist,
- Fig. 24: eine Querschnittsdarstellung durch ein erfindungsgemäßes vertikales Medienversorgungssystem mit einem Grundkörper mit 150 mm Tiefe, beidseitig erweitert mit parallelen Ergänzungsprofilen mit 50 mm Tiefe und mit beidseitigen Sanitär- / Gas- und Elektroentnahmen,
- Fig. 25: eine Querschnittsdarstellung durch ein erfindungsgemäßes horizontales Medienversorgungssystem mit einem Grundkörper mit 150 mm Tiefe, beidseitig erweitert mit parallelen Ergänzungsprofilen mit 50 mm Tiefe und mit beidseitigen Sanitär- / Gas- und Elektroentnahmen,
- Fig. 26: eine Querschnittsdarstellung durch ein erfindungsgemäßes vertikales Medienversorgungssystem mit dem Sonderprofil nach Fig. 4, beidseitig erweitert mit parallelen Ergänzungsprofilen mit 50 mm Tiefe und mit beidseitigen Elektroentnahmen,
- Fig. 27: eine Querschnittsdarstellung durch ein erfindungsgemäßes horizontales Medienversorgungssystem mit dem Sonderprofil nach Fig. 4, beidseitig erweitert mit parallelen Ergänzungsprofilen mit 50 mm Tiefe und mit beidseitigen Elektroentnahmen,
- Fig. 28: eine Querschnittsdarstellung durch ein erfindungsgemäßes vertikales Medienversorgungssystem mit dem Sonderprofil nach Fig. 4, beidseitig erweitert mit parallelen Ergänzungsprofilen mit 100 mm Tiefe und mit beidseitigen Sanitär- / Gas- und Elektroentnahmen,
- Fig. 29: eine Querschnittsdarstellung durch ein erfindungsgemäßes horizontales Medienversorgungssystem mit dem Sonderprofil nach Fig. 4, beidseitig erweitert mit parallelen Ergänzungsprofilen mit 100 mm Tiefe und mit beidseitigen Sanitär- / Gas- und Elektroentnahmen,
- Fig. 30: eine Querschnittsdarstellung durch ein erfindungsgemäßes vertikales Medienversorgungssystem mit dem Sonderprofil nach Fig. 11, beidseitig erweitert mit parallelen Ergänzungsprofilen mit 50 mm Tiefe und mit beidseitigen Sanitär- / Gas- und Elektroentnahmen,
- Fig. 31: eine Querschnittsdarstellung durch ein erfindungsgemäßes horizontales Medienversorgungssystem mit dem Sonderprofil nach Fig. 11, beidseitig erweitert mit parallelen Ergänzungsprofilen mit 50 mm Tiefe und mit beidseitigen Sanitär- / Gas- und Elektroentnahmen,
- Fig. 32: eine perspektivische Ansicht eines geraden Querstegs für ein Medienversorgungssystem gemäß der vorliegenden Erfindung,
- Fig. 33: eine perspektivische Ansicht eines gekröpften Querstegs für ein Medienversorgungssystem gemäß der vorliegenden Erfindung,
- Fig. 34: eine perspektivische Ansicht eines weiteren geraden Querstegs/Querprofils für ein Medienversorgungssystem gemäß der vorliegenden Erfindung,
- Fig. 35: eine perspektivische Ansicht eines weiteren gekröpften Querstegs/Querprofils für ein Medienversorgungssystem gemäß der vorliegenden Erfindung,
- Fig. 36: eine teilweise perspektivische Ansicht eines Medienversorgungssystems mit Berührungsschutz, welches nicht Gegenstand der vorliegenden Erfindung ist,
- Fig. 37: eine perspektivische Ansicht eines Frontdeckels für ein Medienversorgungssystem gemäß der vorliegenden Erfindung,
- Fig. 38: eine Vorderansicht einer Kopfplatte mit einer Tiefe von 100 mm zur einseitigen Entnahme für ein Medienversorgungssystem gemäß der vorliegenden Erfindung,
- Fig. 39: eine Vorderansicht einer weiteren Kopfplatte mit einer Tiefe von 100 mm für ein Medienversorgungssystem gemäß der vorliegenden Erfindung,
- Fig. 40: eine Vorderansicht einer weiteren Kopfplatte mit einer Tiefe von 150 mm für ein Medienversorgungssystem gemäß der vorliegenden Erfindung,
- Fig. 41: eine Vorderansicht einer Säule mit einer Kopfplatte für eine beidseitige Entnahme,
- Fig. 42: eine perspektivische Ansicht eines mobilen Medienversorgungssystems mit einem Laufwagen, welches nicht Gegenstand der vorliegenden Erfindung ist,
- Fig. 43: eine perspektivische Ansicht eines vertikalen Medienversorgungssystems in einer Trennwand, welches nicht Gegenstand der vorliegenden Erfindung ist,
- Fig. 44: eine perspektivische Ansicht eines vertikalen Medienversorgungssystems, welches auf einer Trennwand montiert ist, welches nicht Gegenstand der vorliegenden Erfindung ist,
- Fig. 45: eine perspektivische Ansicht eines horizontalen Medienversorgungssystems in einer Trennwand, welches nicht Gegenstand der vorliegenden Erfindung ist,
- Fig. 46: eine perspektivische Ansicht eines horizontalen Medienversorgungssystems, welches auf einer Trennwand montiert ist, welches nicht Gegenstand der vorliegenden Erfindung ist,
- Fig. 47: eine Draufsicht eines Medienversorgungssystems mit unterschiedlichen Schenkellängen (100 mm und 150 mm), mit einem Erweiterungsprofil 50 mm und mit abgewinkeltem Deckel gemäß einer fünften Ausführungsform der vorliegenden Erfindung,
- Fig. 48: eine Draufsicht eines Medienversorgungssystems mit unterschiedlichen Schenkellängen (150 mm und 200 mm), mit einem Erweiterungsprofil 50 mm und mit abgewinkeltem Deckel gemäß einer sechsten Ausführungsform der vorliegenden Erfindung,

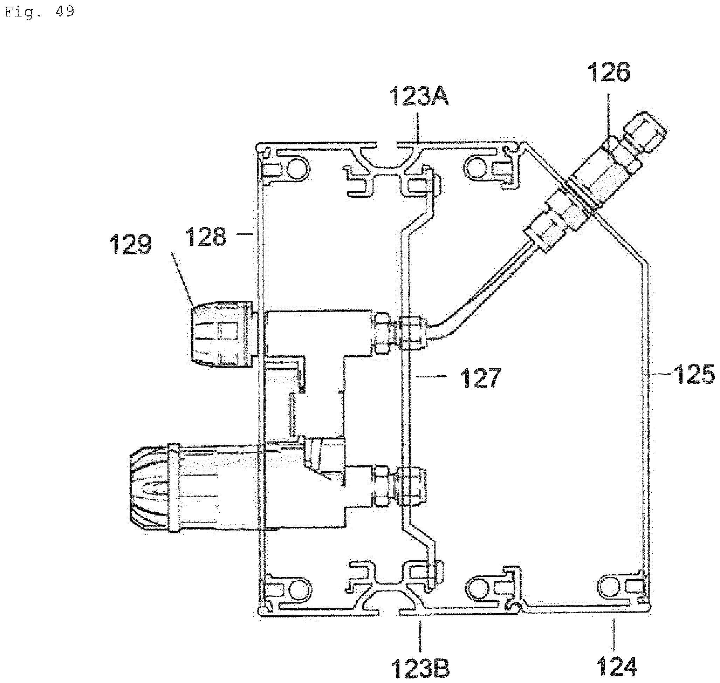

- Fig. 49: eine Draufsicht auf ein Medienversorgungssystem zum Einsatz in abgesaugten Abzügen und Sicherheitskabinen mit unterschiedlichen Schenkellängen (100 mm und 150 mm) mit einem Erweiterungsprofil 50 mm und mit abgewinkeltem Deckel gemäß einer siebenten Ausführungsform der vorliegenden Erfindung,

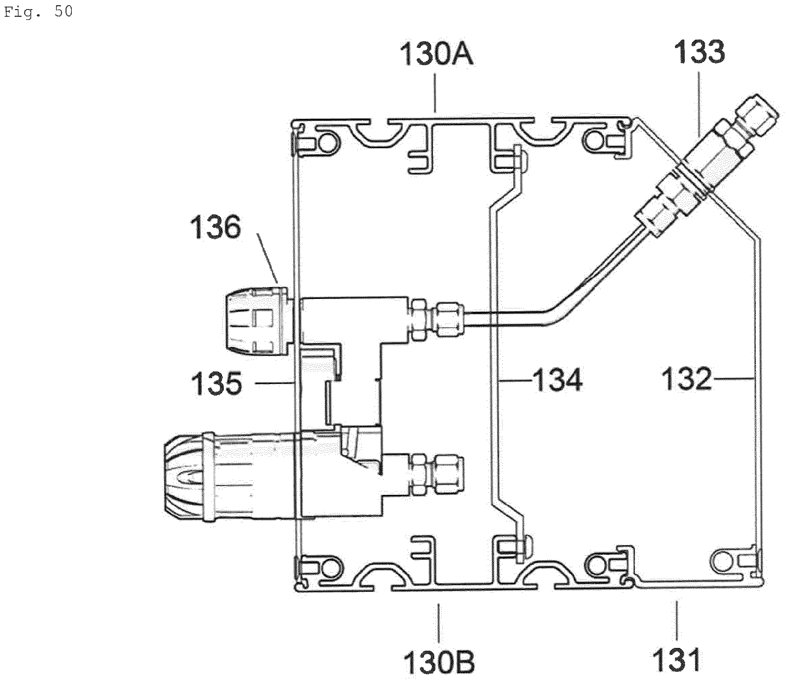

- Fig. 50: eine Draufsicht auf ein Medienversorgungssystem zum Einsatz in abgesaugten Abzügen und Sicherheitskabinen mit unterschiedlichen Schenkellängen (150 mm und 200 mm) mit einem Erweiterungsprofil 50 mm und mit abgewinkeltem Deckel gemäß einer achten Ausführungsform der vorliegenden Erfindung.

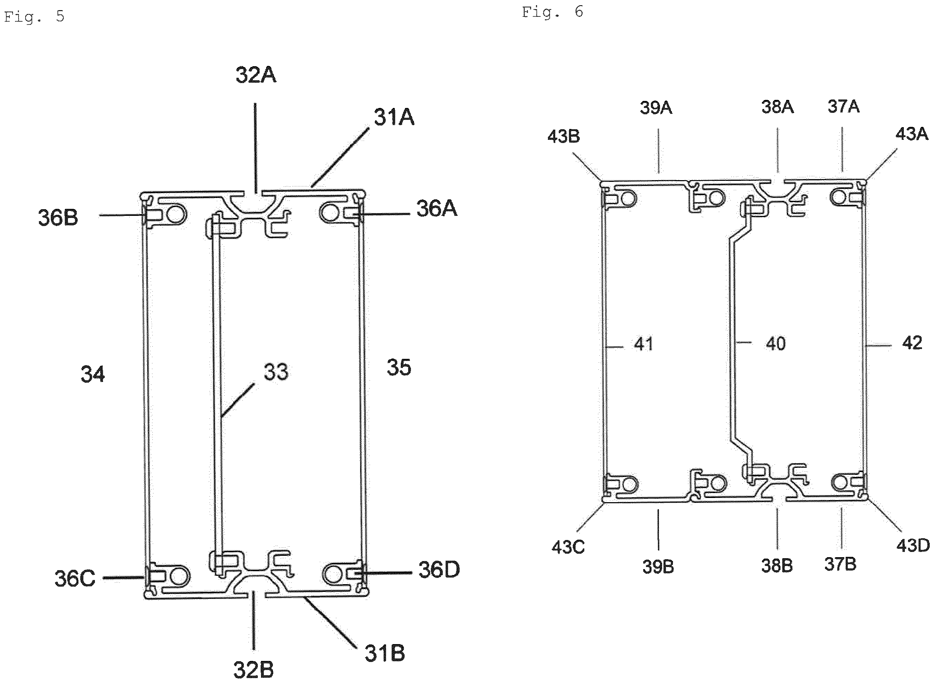

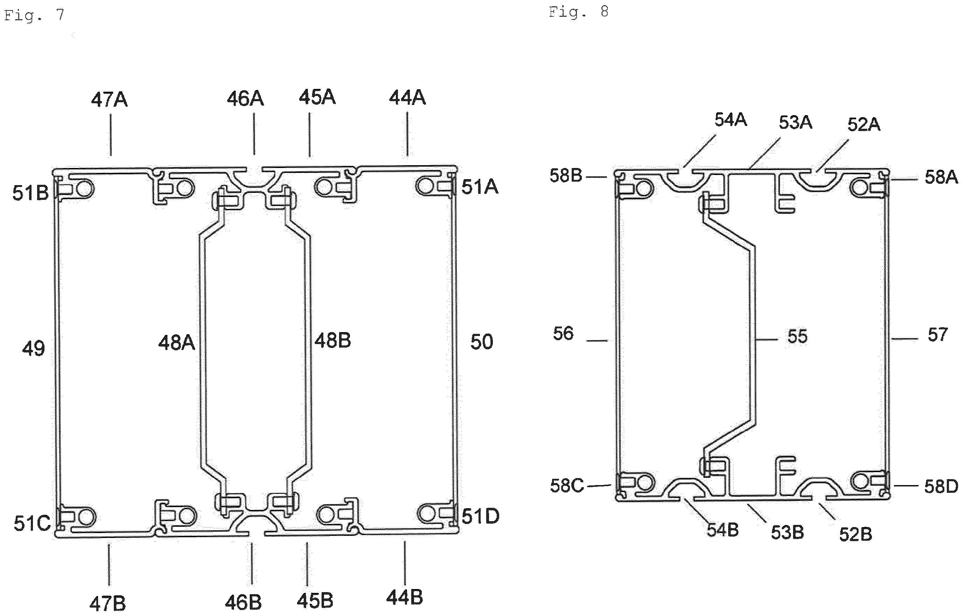

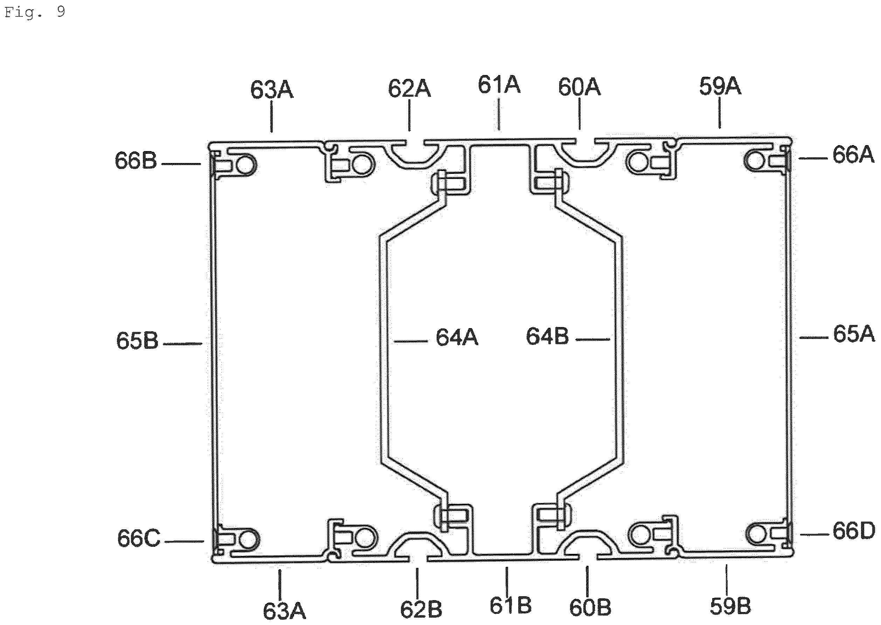

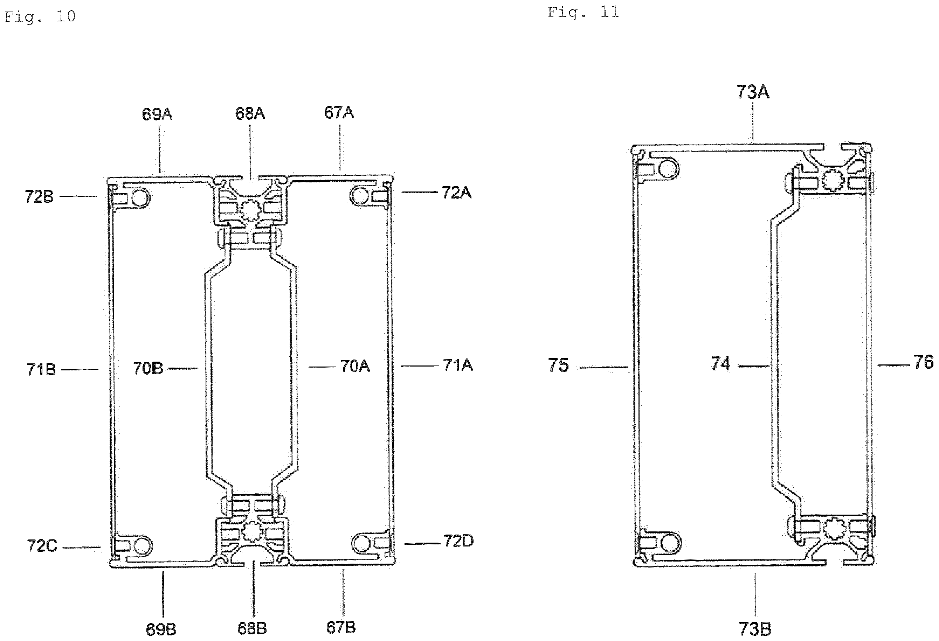

Ein erfindungsgemäßes Medienversorgungssystem kann insbesondere die folgenden Komponenten umfassen: einen Grundkörper mit zwei Profilen (insbesondere mit einer Tiefe von 100 mm oder 150 mm) oder mit zwei Sonderprofilen (vgl. z.B. Fig. 10 und 11), einen Quersteg (vgl. z.B. Fig. 6 und 8) oder zwei Querstege (vgl. z.B. Fig. 7 und 9), wenigstens ein Paar Ergänzungsprofile (insbesondere mit einer Tiefe von 50 mm, vgl. z.B. Fig. 6 mit einem Paar Ergänzungsprofilen oder Fig. 7 mit zwei Paar Ergänzungsprofilen), eine Kopfplatte und eine Fußplatte bzw. zwei Enddeckel sowie einen Frontdeckel bei einseitigen/beidseitigen Medienentnahmen und einen rückseitigen Deckel auf einer Gegenentnahmeseite.

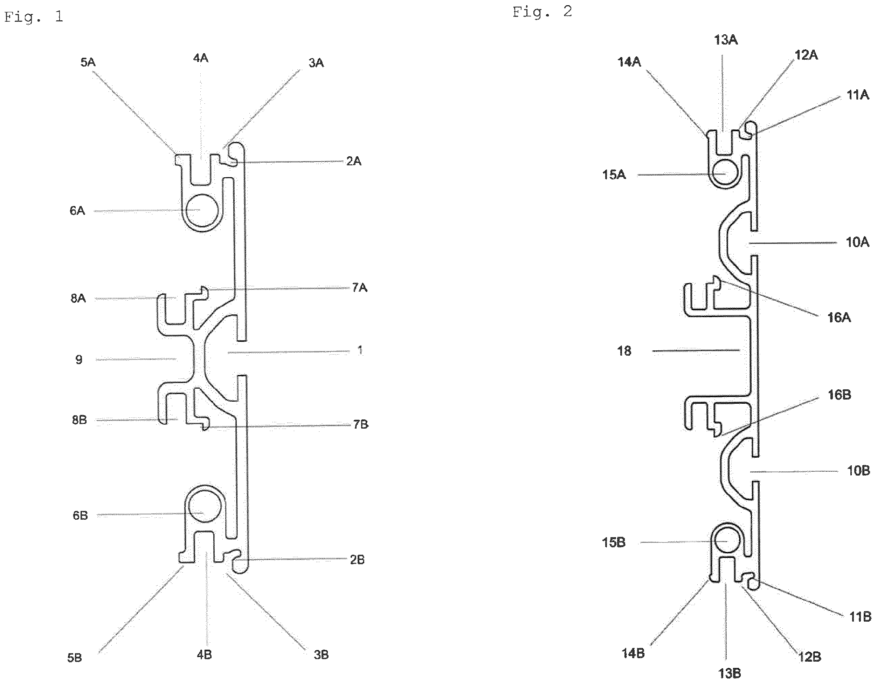

Fig. 1 zeigt ein Profil bzw. ein Grundprofil mit einer Tiefe von 100 mm für ein Medienversorgungssystem gemäß der vorliegenden Erfindung, welches symmetrisch und unsymmetrisch in einem Medienversorgungssystem angeordnet sein kann, z.B. in den Medienversorgungssystemen gern. Fig. 5 bis 7. Die Fig. 5 zeigt eine symmetrische Anordnung welche nicht Gegenstand der vorliegenden Erfindung ist. Fig. 2 zeigt ein weiteres Profil bzw. ein Grundprofil für ein Medienversorgungssystem gemäß der vorliegenden Erfindung, welches ähnlich zu dem Profil nach Fig. 1 aufgebaut ist, jedoch eine Tiefe von 150 mm aufweist. Dieses Profil kann z.B. in den Medienversorgungssystemen nach Fig. 8 und 9 angeordnet sein.

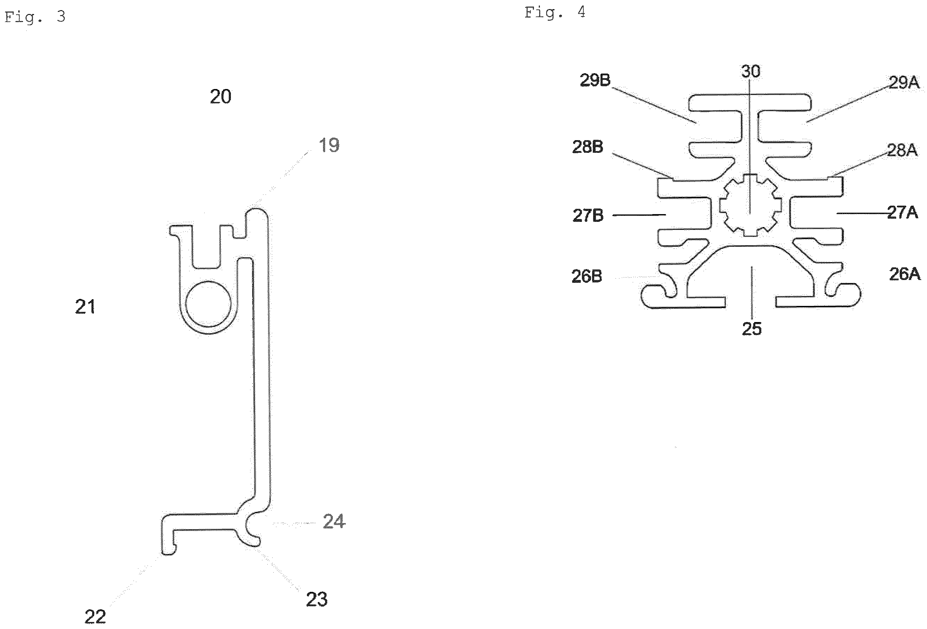

Fig. 6 zeigt eine einseitige unsymmetrische Erweiterung mit einem Paar Ergänzungsprofilen gemäß einer ersten Ausführungsform der vorliegenden Erfindung. Eines dieser Ergänzungsprofile ist vergrößert durch Fig. 3 gezeigt. Fig. 6 zeigt eine zweiseitige symmetrische Erweiterung mit zwei Ergänzungsprofilen wie durch Fig. 3 gezeigt. Der Grundkörper kann zwei einander gegenüberliegende, identische Aluminium-Strangpressprofile umfassen, welche sich bei vertikaler Anordnung über die gesamte Höhe bzw. bei horizontaler Anordnung über die gesamte Breite erstrecken. Die beiden Grundprofile werden mit einem Quersteg (insbesondere ein Stegblech bzw. ein durchgehendes Blech) im Bereich möglicher Elektroinstallationen zu einer Einheit verbunden. Diese Konstruktionsart hat den Vorteil, dass beide Längsseiten eines Kanals, welcher durch das Medienversorgungssystem ausgebildet wird, offen sind und für Installationsarbeiten leicht zugänglich sind. Die Querstege bzw. das durchgehende Querblech (33, 40, 48 A/B, 55, 64 A/B) sind nur im mittleren Bereich angeordnet. Da hier ein Einfädeln der Installationsleitung etwa als Schlauch oder Kabel möglich sein sollte, kann eine zweite gegenüberliegende Elektroversorgungseinheit mit dem dafür vorgesehenen Querblech auch erst zu einem späteren Zeitpunkt endmontiert werden. Vorteilhaft ist dabei, dass während der Montage durch die Kopfplatte und die Fußplatte eine ausreichende Stabilität erreicht werden kann.

Der Grundkörper kann eine Nut 1 an einem Kanalseitenteil aufweisen. In diese Nut 1 können handelsübliche Nutensteine eingesetzt werden. Damit kann der Kanal zum einen Zubehörelemente aufnehmen, und zum anderen an anderen Profilen befestigt werden. Im Inneren des Kanales zur Befestigungsnut kann ein Schraubkanal (8A/B) vorzugsweise für Schrauben M5 angeordnet sein. Damit können Querstege und Bleche parallel zum Kanal im Inneren des Kanales befestigt werden. Die Montagehilfe 7A/B stellt eine Erleichterung bei der Montage der Querstege und Bleche in den Schraubkanal 8A/B dar. Als vorderer Abschluss des Grundkanals können entweder frontseitige oder rückseitige Deckel (Enddeckel) mit Schrauben 36A/B in den Schraubkanal befestigt werden. Die vormontierten Frontdeckel mit den vorgesehenen Entnahmestellen können schnell montiert werden und sind im rückwärtigen Bereich mit Sanitär-und Gasinstallationen während der Montage immer noch leicht zugänglich.

Zusätzlich können sich noch durchgehende Schraubkanäle M8 (6A/B) zur vertikalen Befestigung einer in Größe anpassungsfähigen Kopf- und Fußplatte befinden, bei horizontaler Befestigung der Enddeckel am Grundprofil sowie an den Erweiterungsprofilen 4A/B, 14A/B und 21. Von Vorteil ist diese Art der Befestigung, da hier eine ausreichend stabile Verbindung bei abgehängten Medienversorgungssystemen erreicht werden kann.

Die Erweiterung des Grundkörpers 100 mm kann durch mindestens auf einer Seite paarweise angeordnete Erweiterungsprofile mit einer Tiefe von jeweils 50 mm erfolgen (Fig. 3). Diese werden durch eine halbradiusförmige ausgebildete Profilnase 23 in das dafür vorbereite Gegenstück im Grundkörper 2A/B (vgl. Fig. 1) eingeschwenkt und über eine Raste 5A/B (vgl. Fig. 1) arretiert. Von Vorteil ist diese Konstruktion, da das Erweiterungsprofil in der gesamten Länge in das Grundprofil eingeschwenkt werden kann. Mit der Arretierung an der Raste 5A/B am Grundprofil wird das Erweiterungsprofil sofort ausreichend stabil verbunden. Die langen Schenkel zwischen der halbradiusförmig ausgebildeten Profilnase 23 und der Raste 5A/B verleihen bei der gegenüberliegenden Anordnung dem erweiterten Grundkörper eine Aussteifung parallel zu den Querprofilen. Eine zusätzliche Sicherung erfolgt bei Befestigung dieser Querstege und Bleche im Schraubkanal 4A/B. Das Erweiterungsprofil kann an vorgesehener Stelle Bohrungen aufweisen und mit dem Quersteg / Blech im Schraubkanal 4A/B verschraubt werden. Unter Berücksichtigung verschieden dicker Frontdeckel kann der Frontdeckel an den Seiten eine Aufkantung aufweisen. Dies ist von Vorteil bei schweren Aufbauarmaturen bzw. bei den Kräften, die durch die Bedienung entstehen, um dem Deckel mehr Stabilität zu verleihen . Eine Nut zur Aufnahme der Aufkantung ist hier im Profil vorgesehen.

Aufgrund des modularen Aufbaus des Systems ist es von Vorteil, die einzelnen Entnahmen auf einzelnen Frondeckeln zu montieren. Ein besonderer Vorteil ist, dass die Frontdeckel in geometrischen Formen halbrund, abgewinkelt und in dreieckiger Form ausgebildet werden können.

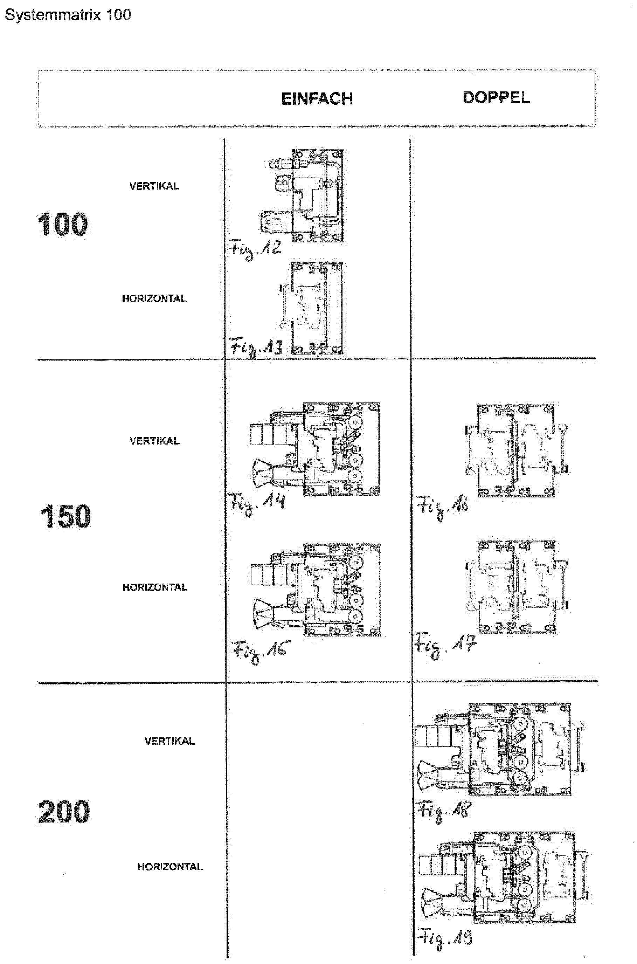

Die einzelnen Entnahmestellen im Bereich Sanitär und Gas können auf einzelnen Frontdeckeln montiert (Fig. 12-19) werden:
- wässrige Medien, z.B. Trinkwasser, Betriebswasser, Flusswasser, Brunnenwasser, Berieselungswasser, Kühlwasservorlauf und Kühlwasserrücklauf, Wasserdampf, Kondensat, vollentsalztes Wasser, destilliertes Wasser oder Reinstwasser
- technische Gase, z.B. Brenngas oder Druckluft
- Reingase oder Reinstgase, z.B. brennbare Gase, nicht-brennbare Gase, verbrennungsfördernde Gase, toxische Gase oder korrosive Gase
- Vakuum, z.B. ein Grobvakuum, ein Feinvakuum oder ein Hochvakuum

Folgende Module sind für den Bereich Sanitär und Gas vorgesehen:
- Baukastenhöhe Frontdeckel 60 mm mit Einbau von Armaturen mit außenliegenden Ventilkörpern hier auch doppelt,
- Baukastenhöhe Frontdeckel 60 mm mit Einbau von innenliegenden Ventilkörpern,
- Baukastenhöhe Frontdeckel 60 mm mit Einbau von Armaturen mit innenliegenden Ventilkörpern mit seitlicher Entnahme und
- Baukastenhöhe Frontdeckel 60 mm mit Einbau von Armaturen mit innenliegenden Ventilkörpern mit gesammelter Entnahme.

Weiterhin können auch insbesondere elektrische Anschlüsse durch das Medienversorgungssystem bereitgestellt werden, z.B. Anschlussdosen (-110V / -120V / -127 V / -220 V/ -230 V/ -240 V) für Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+ F (CEE /7/), Stecker-Typ G (BS 1363) "Commonwealth-Stecker", Stecker-Typ H (SI-32), Stecker-Typ I (AS 3112), Stecker-Typ J (SEV 1011), Stecker-Typ K (DS 60884-2-D1), Stecker-Typ L (CEI 23-50), Stecker-Typ M (BS 546, 15-A) und Stecker-Typ N (IEC 60906-1). Auch Anschlussdosen mit 400V können vorgesehen sein, z.B. CEE 7/3 deutsche Schukosteckdose (Typ F), CEE 7/4 deutscher Schukostecker (Typ F), CEE 7/5 französische Steckdose (Steckdose Typ E), französischer Stecker (Stecker-Typ E), CEE 7/7 Vereinigung von Stecker-Typ E und Schuko (Typ F), CEE 7/16 Eurostecker (Stecker-Typ C) oder CEE 7/17 Konturenstecker. Ferner kann über ein Medienversorgungssystem auch das Folgende bereitgestellt werden: Sicherheitsstrom-Versorgung / SV-Netz, Netzersatzversorgung NEA, Potenzialausgleich, Kleinverteiler mit Fehlerstromschutzschalter und Absicherungen sowie Datenleitungen/Telefonleitungen.

Folgende Module sind vorgesehen für den Einbau von Elektroinstallationen. Als zusätzliche Anforderung kann eine höhere nach Schutzart IP 44 oder IP 54 erfolgen:
- Baukastenhöhe 100 mm mit Einbau von 2-4 Steckdosen,
- Baukastenhöhe 100 mm mit Einbau von 400 Volt Steckdose,
- Baukastenhöhe 100 mm mit Einbau von 1-2 EDV Dosen,
- Baukastenhöhe 100 mm mit Einbau von Switchen,
- Baukastenhöhe 100 mm für den Einbau von Erdungs- oder Potenzialausgleichsbuchsen und
- Frontabdeckungsblech mit Ausschnitt für Sicherungen und Fl-Fehlerstromschutzschalter.

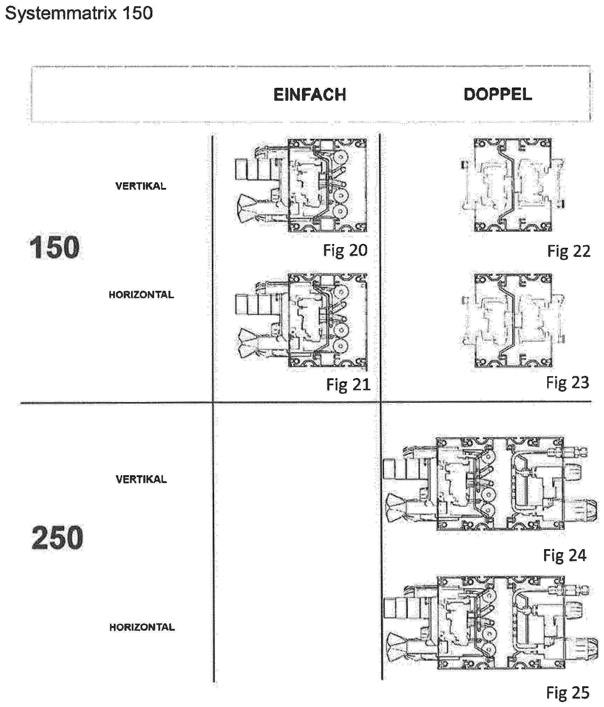

Das Grundprofil 150 mm (Fig. 2) kann symmetrisch entsprechend dem Grundprofil 100 mm (Fig. 1) für Medienversorgungssysteme mit einer höheren Bestückung mit Medienentnahmen als System mit einseitiger oder zweiseitiger Entnahme verwendet werden (Fig. 20 - 25). Das Grundprofil 1500 mm ermöglicht die vorteilhafte Verwendung als doppelseitiger Elektrokanal mit einer separaten elektrischen Einspeisung und Absicherung auf beiden Seiten (Fig. 22, 23).

Der Grundkanal aus dem Sonderprofil 1 und jeweils paarweise beidseitig angeordneten Erweiterungsprofilen 50 mm weist gegenüber dem Grundkanal 150 mm (Fig. 8) eine höhere Möglichkeit der Installation in der mittleren Ebene auf. Beide Seiten können getrennt unabhängig voneinander eingespeist und abgesichert werden. Ein beidseitig durchgehender Berührungsschutz ermöglicht die Installation von beidseitigen Gasentnahmestellen.

Der Grundkanal nach Fig. 11 mit dem Sonderprofil 2 ist gegenüber dem Grundkanal nach Fig. 5 unsymmetrisch, ist jedoch ansonsten identisch. Der Vorteil dieser Lösung liegt in der Ausführung als einseitiger Wandkanal mit einer Erweiterungsmöglichkeit zu einer beidseitigen Entnahmesituation durch die Erweiterung mit Erweiterungsprofilen.

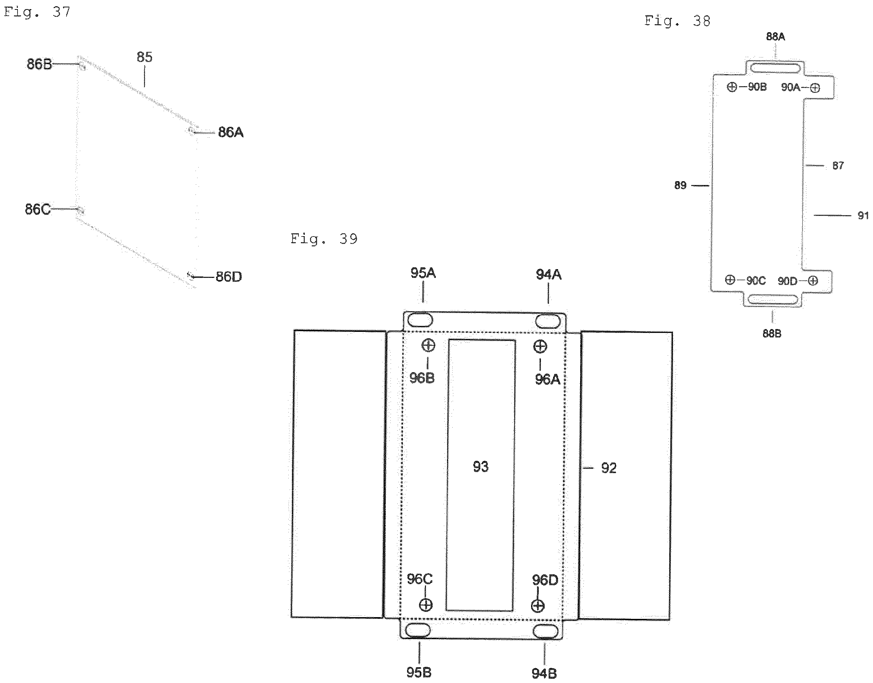

Ein weiterer Bestandteil des Baukastensystems ist der Frontdeckel zur Aufnahme der elektrischen, sanitären und gasförmigen Medien (Fig. 37). Dieser bildet den vorderen Abschluss des Medienversorgungssystems. Der Medien-Entnahmedeckel kann als Platte ausgestaltet sein und kann auf beiden Seiten des Grundkörpers befestigt werden. Wichtig ist dabei die Befestigung des Deckels am Grundkörper, um eine stabile Verbindung der beiden Grundprofile zu erreichen. Die Befestigung erfolgt insbesondere mittels Schrauben, welche in die Schraubkanäle 4A/B, 13A/B, 20 des Grundkörpers 36A-D, 43A/43D, 58A-D oder des Zusatzprofiles 43B/C, 51 A-D, 66A-D und 72 A-D eingesetzt werden. Der Deckel kann aus verschiedenen Konstruktionsarten oder Materialen bestehen. Folgende Ausführungen sind möglich: Aluminium, Aluminium als Strangpressprofil, Stahlblech lackiert, Edelstahl, Kunststoff, Kunststoff als Strangpressprofil, Kunststoff als Spritzgussbauteil und Glas.

Der Deckel kann Öffnungen 86A-D für die Schrauben enthalten, sowie Öffnungen, in welche Armaturen oder Steckdosen eingesetzt werden. Es ist vorgesehen für jede Armatur bzw. Elektrokomponente einen eigenen Deckel 85 zu verwenden. Die Deckel werden mit Rasterabmessungen von 60, 75, 120, 150, 300 bzw. 1200 mm Länge hergestellt. Die Befestigung der Armaturen und Elektrokomponenten erfolgt dabei direkt am Deckel. Der Grundkörper bildet zusammen mit seinen Medienentnahmedeckeln einen geschlossenen Kasten aus, der ein hohes Flächenträgheitsmoment größer als 1000 mm⁴ in x-Richtung und 500 mm⁴ in y-Richtung ergibt. Dieses Trägheitsmoment wird benötigt bei freier Aufhängung an der Decke mit einseitiger Einspannung. Das Trägheitsmoment wird erreicht durch die Abmessungen von ca. 180 mm in x-Richtung und 120 mm in y-Richtung. Wichtig ist die feste Verbindung des Deckels mit dem Grundkörper. Damit wird ein geschlossener Kasten erzeugt, welcher hohe Querkräfte aufnehmen kann.

Entsprechend des Frontdeckels kann bei einer einseitigen Bedienung der Deckel im rückseitigen Bereich als durchgehender Deckel verwendet werden. Hier ist von Vorteil, dass einseitige Medienversorgungssysteme mit frei im Raum angeordnetem System im rückwärtigen Bereich eine farbliche Gestaltungsmöglichkeit, Firmenlogos oder Werbung aufweisen können.

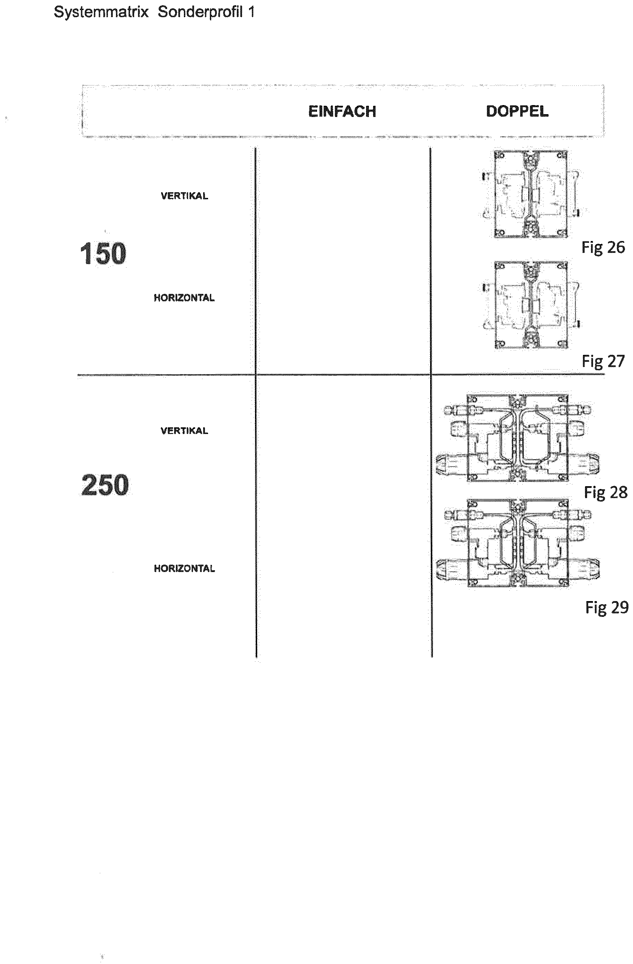

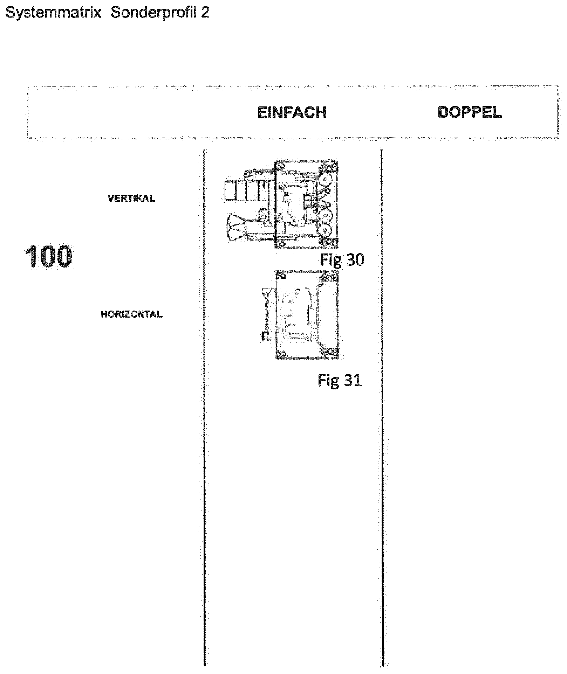

Die Systemmatrix 100 (Fig. 12-19), die Systemmatrix 150 (Fig. 20-25), die Systemmatrix Sonderprofil 1 (Fig. 26-29) und die Systemmatrix Sonderprofil 2 (Fig. 30-31) zeigen die unterschiedlichen Arten der Bestückung des Medienversorgungssystems mit Armaturen und elektrischen Grundkomponenten grafisch.

Mit dem Erweiterungsprofil (Fig. 3) wird das System in der Tiefe erweitert. Das Vorzugsmaß für die Verbreiterung in der Tiefe beträgt 50 mm. Es sind jedoch auch Erweiterungsprofile mit einer Verlängerung des Hauptschenkels in Verlängerungen um beispielsweise jeweils 10 mm möglich. Der Vorteil ist eine Anpassung je nach Nutzung des Medienversorgungssystems.

Die Querstege 77, 79 und Querprofile 81,82 sind im Bereich der Elektroinstallation vornehmlich als durchgängiges Blech ausgeführt um einen nach Arbeitsschutz notwendigen Berührungsschutz zu erreichen. Im Bereich der Sanitär und Gasinstallationen werden diese Querverbindungen nur als Stege ausgebildet. Wichtig ist die feste Verbindung von Querstegen 78A-D, 80A-D und Querprofilen (Verbindung entsprechen) mit den beiden Grundprofilen. Damit wird ein geschlossener Kasten erzeugt, welcher hohe Querkräfte aufnehmen kann. Besonders unter Verwendung von verkröpften Querstegen und Querprofilen kann hier eine höher statische Lastaufnahme sichergestellt werden.

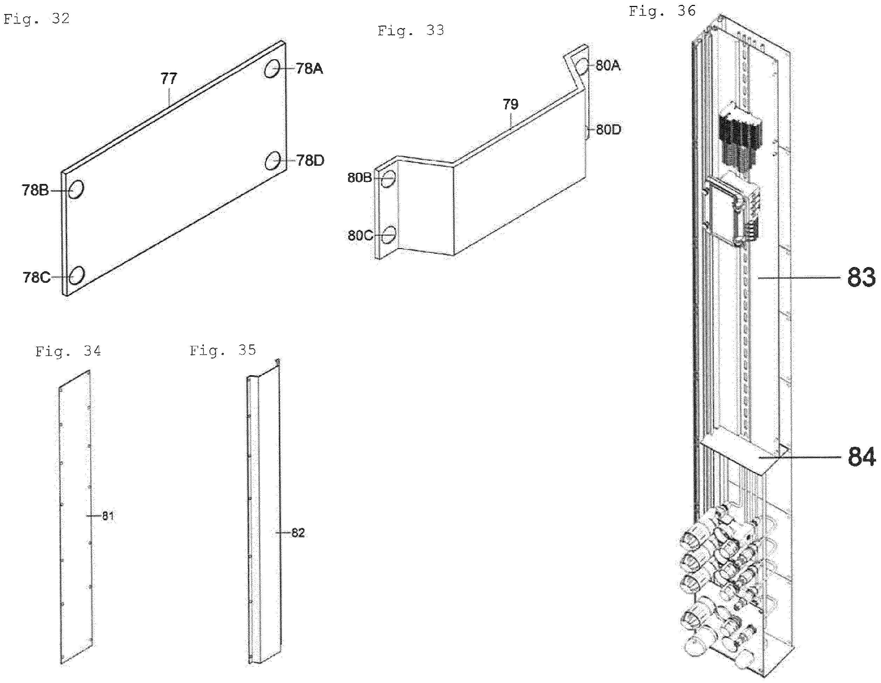

Der typische Aufbau eines Medienversorgungssystems im Bereich der elektrischen Installation wird in (Fig. 36) gezeigt. Das Querprofil 81,82 kann mit Hilfe von Schrauben in dem Schraubkanal 8A/B, 16A/B eingesetzt werden. An diesem Querprofil können Standard Hutschienen zur Aufnahme folgender elektrischer Bauteile befestigt werden: Klemmenfeld / Einspeiseeinheit, Fl-Fehlerstromschutzschalter und Sicherungen aller Art. Am ausgestanzten Frontdeckel können ein Scharnierdeckel befestigt werden, der im geschlossenen Zustand eine Abdeckung für die Sicherungen und Fl-Fehlerstromschutzschalter darstellt. Des Weiteren können an den Medienentnahmedeckel 37 elektrische Einbaugeräte aller Art befestigt werden, z.B. Steckdosen einphasig, zweiphasig oder dreiphasig oder Befehlsgeräte. Folgende Module sind vorgesehen für den Einbau von Elektrokomponenten:
- Modulhöhe 100 mm mit Einbau von 2-4 Steckdosen,
- Modulhöhe 100 mm mit Einbau von 400 Volt Steckdose,
- Modulhöhe 100 mm mit Einbau von 1-2 EDV Dosen,
- Modulhöhe 100 mm für den Einbau von Erdungs oder
- Potenzialausgleichsbuchsen.

Hinzu kommen Anschlusselemente für das Gewerk Elektro, nämlich insbesondere eine Modulhöhe von 300 mm für das Anschluss-Element mit Anschlussklemme. Es besteht auch die Möglichkeit auf beiden Seiten des Grundprofiles Deckenbleche anzubringen. Daher besteht die Möglichkeit mit dem Profil auf beiden Längsseiten Funktionen anzubringen.

Elektrische Anlagenteile müssen entsprechend geltenden Vorschriften bei gemischten Installationen im Medienversorgungssystem einen Berührungsschatz nach hinten 83 bzw. nach unten / seitlich (84) aufweisen. Dieser kann bei einer Ausführung des Medienversorgungssystems als reiner Elektrokanal entfallen. Zusätzlich werden weitere Trennstege in das Medienversorgungssystem eingebaut, um eine getrennte Leitungsführung im Bereich Elektro von Starkstrom und Schwachstrom zu ermöglichen.

### Kopfplatten

Als weiteres Konstruktionsmerkmal verfügt das Medienversorgungssystem über zwei Endplatten, welche auch in der vertikalen hängenden Ausführung als eine kleinere schwerere Kopfplatte 87 oder 92 bei einseitig ausgeführten und als eine große schwere Kopfplatte 97 bei beidseitig erweiterten Systemen ausgeführt werden können. Endplatten können als Kanalabschluss ohne Festigkeitsanforderung angesehen werden. Als Kopfplatten können Endplatten mit statischen Anforderungen bezeichnet werden. Diese Platten werden entweder mit Schrauben über die seitlichen Schraubkanäle befestigt oder können im Fall von einfachen Endplatten auch nur angeklebt oder mit Kunststoffdübeln fixiert werden.

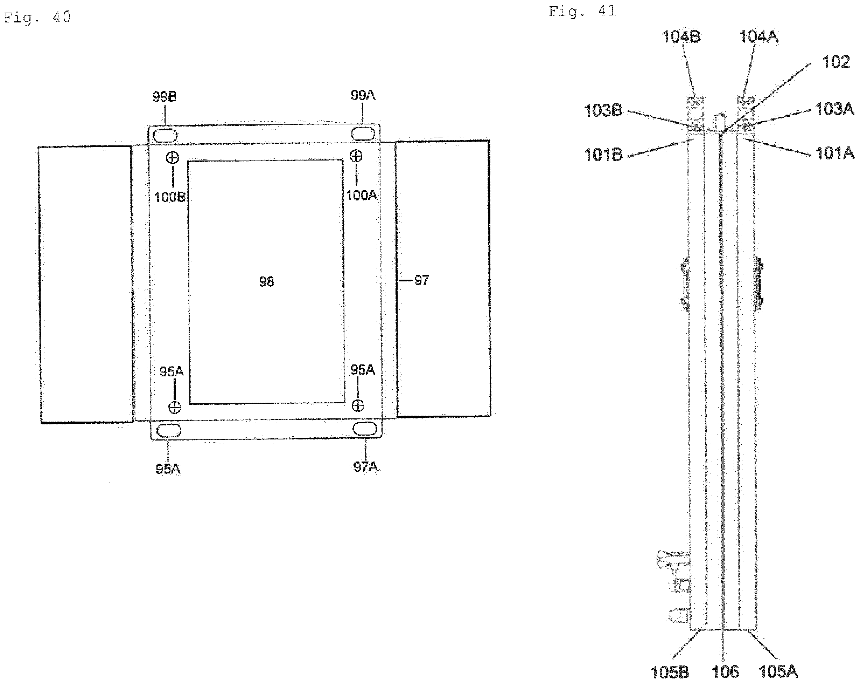

Mit Hilfe von Kopfplatten wird die Lage der Säule am oberen Aufhängepunkt bestimmt. Im Falle von einer einseitigen Deckenbefestigung der Säule muss die Endplatte in der Lage sein, hohe Kräfte auszunehmen. Aus diesem Grund wird die Endplatte als schwere Kopfplatte ausgeführt und mit mind. 4 Stück M8-Schrauben 90A-D, 96A-D oder 100A-D in den Längskanälen verankert. Fig. 41 zeigt eine Aufhängung an Aluminiumdeckenprofilen, bei welchem die Kabel und Rohre durch eine Öffnung in der oberen Kopfplatte geführt werden.

Die Kopfplatte 103 wird dabei mit Hilfe von Schrauben 103A/B befestigt, wobei die Schrauben vertikal in die Schraubkanäle 6A/B des Grundprofiles 100 oder Schraubkanäle 15A/B des Grundprofils 150 eingeschraubt werden. Mit Hilfe von Schrauben 103A/B wird das ganze System an Deckenträger 104A/B befestigt. Die Kopfplatte 102 hat hierbei eine Aussparungen zur Durchführung von Kabel und Leitungen zur Gebäudeschnittstelle.

Bei einer Ausführung als Elektrosystem reicht der Kanal 106 aus. Werden sanitäre Medien zusätzlich benötigt, dann wir der Kanal 106 zu einem reinen Leitungsführungskanal und die Medienentnahmen werden um die Tiefe der paarweise angeordneten Erweiterungsprofile 50 mm angeordnet. Der mittlere Kanal 106 bleibt immer an derselben Stelle fixiert.

### Mobile System hier als Beispiel mit Laufwagen

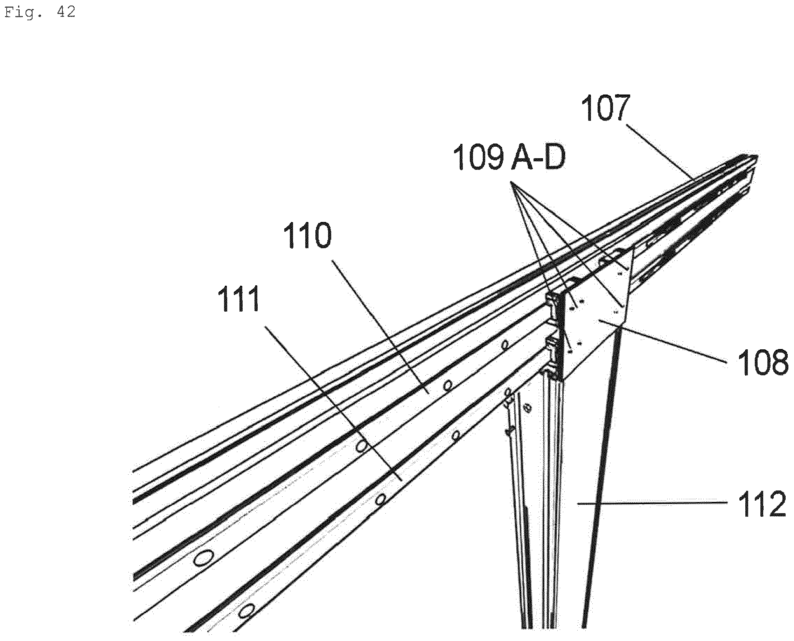

In Fig. 42 wird eine Ausführung bei einer hängenden Medienversorgung beweglich ausgeführt ist, welche nicht Gegenstand der vorliegenden Erfindung ist. In die vertikalen Systemnuten des Trägersystems 107 sind parallel mit dem Systemprofil zwei Führungsprofile 46 integriert und mit Befestigungselementen 48 befestigt. Auf der abgewinkelten Kopfplatte 108 können nun vier Laufwagen 109 A-D aufgeschraubt werden. Damit ist ein sehr stabiler Laufwagen als Einheit gebildet worden, mit dessen Hilfe die ganze Säule parallel zu den beiden linearen Führungsprofilen 110, 111 verschoben werden. Es sind auch vertikale oder horizontale Medienversorgungssystem denkbar, bei welchen entweder mit elektrischen Motoren oder mechanischen Gasdruckfedern nach oben bzw. unten gekippt oder nach oben bzw. unten verfahren werden kann.

### Medienversorgungssystem mit Trennwand

Die folgenden Bilder zeigen Einbauvarianten des Medienversorgungssystems in verschiedenen Einbausituationen in allen Arten von Trennwänden ohne Brandschutzanforderung.

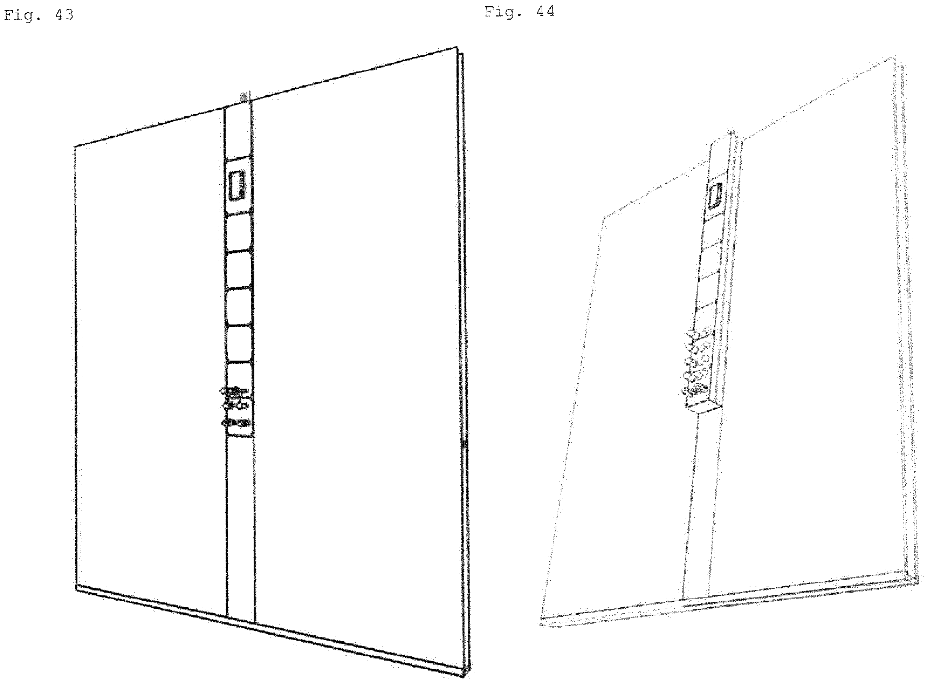

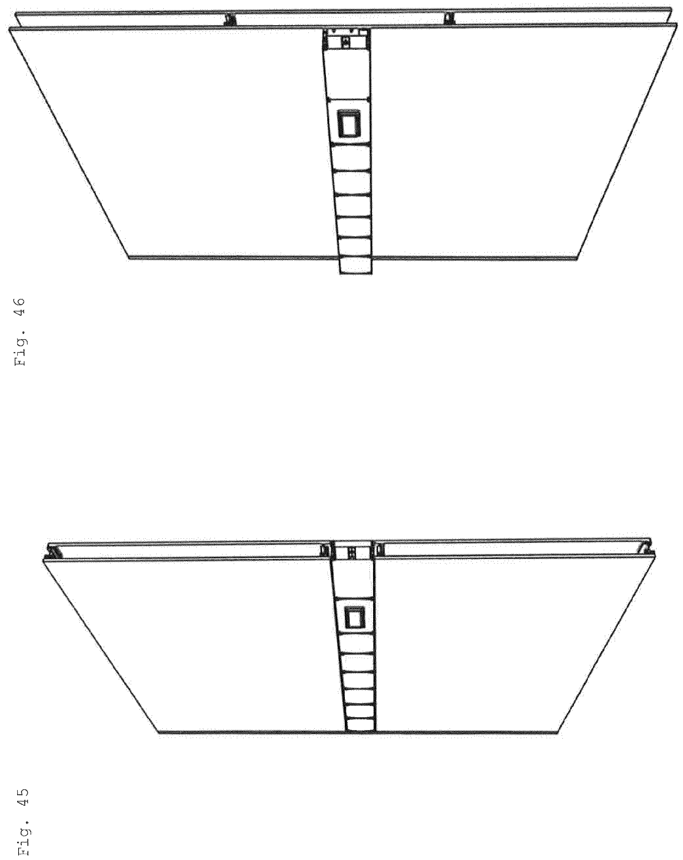

In Fig. 43 ist ein Medienversorgungssystem vertikal in einer Trennwand mit den Grundprofilen 100 oder 150 mm bündig in die entsprechende Wand gleicher Wandstärke eingebaut, welches nicht Gegenstand der vorliegenden Erfindung ist. Ebenso ist es möglich, wie in Fig. 44 ein Medienversorgungssystem vertikal nur teilweise auf eine Trennwand zu montieren. Von Vorteil ist hier, dass bei einem vorher verwendeten Grundkörper 100 oder 150 mm bündig in der Wand verbaut nur die Erweiterungsprofile aufgebracht werden müssen. Bei horizontalen Medienversorgungssystemen wie in Fig. 45 ist ein Grundkörper mit einer Tiefe von 100 mm oder 150 mm mit einer Trennwand, vorzugweise als System- oder Trockenbauwand verbaut. In Fig. 46 ist ein Medienversorgungssystem mit Haltelaschen horizontal auf die Trennwand montiert, welches nicht Gegenstand der vorliegenden Erfindung ist. Das System kann eingesetzt werden, um Medienversorgungssysteme in verschiedener Tiefe und Breite in Wänden herzustellen.

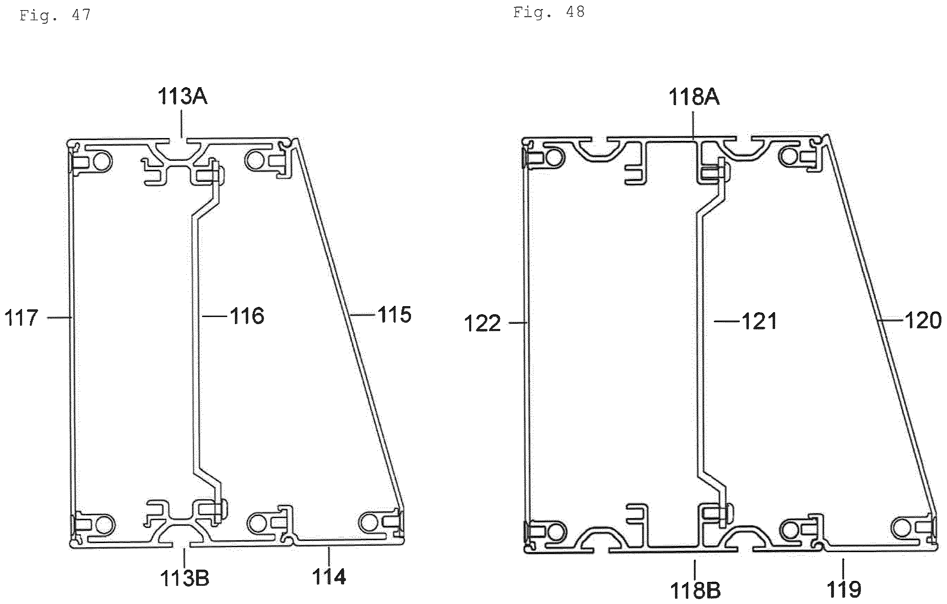

Ein Medienversorgungssystem mit einer Tiefe von 100/150 mm (113A/B, 118A/B) mit unterschiedlichen Schenkellängen (Fig. 47, Fig. 48), hergestellt unter Verwendung von Erweiterungsprofilen 50 mm (114, 119) bietet weitere Vorteile. Damit lässt sich eine ergonomisch verbesserte Lösung erzielen, da durch die geneigte Fläche sich diese Fläche entweder zum Kunden hinbewegt oder entfernt. Ein Frontdeckel 115, 120 ist hier in einer abgewinkelten Form als Sonderprofil ausgeführt. Mit dieser Methode kann ein Medienversorgungssystem aufgebaut werden, welches im Frontbereich geneigt ausgeführt ist. Eine derartige Lösung ist von Vorteil, wenn das System horizontal gelegt wird.

Ein Medienversorgungssystem 100/150 mm in abgesaugten Abzügen und Sicherheitskabinen entspricht in Bauart demjenigen wie im vorigen Absatz beschrieben, jedoch mit dem Unterschied, dass die Entnahmeseite 131 der Armatur oder der elektrischen Versorgung innerhalb der Sicherheitseinrichtung bzw. des Abzugs betrieben werden kann. Befestigt der Kunde noch zusätzliche Spritzschutzblenden aus Glas oder Plexiglas einfach oberhalb / unterhalb oder seitlich des Grundprofils des Medienversorgungssystems, so kann hier unter der vorteilhaft vorhanden symmetrischen Nut ein typischer, den Anfordernissen entsprechender Nassarbeitsplatz errichtet werden. Damit wird eine eher geschlossene Laborsituation erzeugt wie von der BG Chemie in den Richtlinien für Laboratorien gefordert.

Ein Medienversorgungssystem gemäß der vorliegenden Erfindung ermöglicht insbesondere Folgendes auf vorteilhafte Weise: Eine individuelle Anpassung in Tiefe und Breite je nach Erfordernis zur Ausstattung des Medienversorgungssystems als Systembaukasten wird ermöglicht. Das System kann eingesetzt werden, um Medienversorgungssystem in verschiedener Tiefe und Breite herzustellen. Der Ort der Verwendung des Medienversorgungssystems im Labor ist multifunktional: eine horizontale Medienversorgung ist möglich an Zellen / Wänden / Mitteltischen aufgeständert oder aufgesetzt / Mitteltischen abgehängt oder frei im Raum auch in Wänden und Wandsystemen. Weiterhin ist eine vertikale Medienversorgung möglich an, vor oder über Zellen / Wänden / Mitteltischen aufgeständert/ Mitteltischen abgehängt oder frei im Raum auch in Wänden und Wandsystemen vertikal hängend und stehend auch klappbar und verschiebbar ausgeführt. Außerdem kann ein Umbau vor Ort sehr schnell und leicht erfolgen mittels einschwenkbarer Erweiterungsprofilen mit Profilnase und Arretierraste.

### Bezugszeichenliste

- 1: Systemnut für Nutensteine
- 2A/B: Aufnahme für eine halbradiusförmig ausgebildete Profilnase
- 3A/B: Aufnahme einer Umkantung eines Frontdeckels
- 4A/B: Schraubkanal M5 zur Befestigung der Frontdeckel oder der Erweiterungsprofile
- 5A/B: Raste zum Arretieren eines Erweiterungsprofils
- 6A/B: durchgehender Schraubkanal M8 zur Befestigung der Kopf- und Fußplatte
- 7A/B: seitliche Führungskante als Montagehilfe
- 8A/B: Schraubkanal M5 zur Befestigung der Querstege und Querbleche
- 9: Transportsicherung
- 10A/B: Systemnut für Nutensteine
- 11A/B: Aufnahme der halbradiusförmig ausgebildeten Profilnase
- 12A/B: Aufnahme einer Umkantung des Frontdeckels
- 13A/B: Schraubkanal M5 zur Befestigung der Frontdeckel/Erweiterungsprofile
- 14A/B: Raste zum Arretieren des Erweiterungsprofils
- 15AIB: durchgehender Schraubkanal M8 zur Befestigung Kopf- und Fußplatte
- 16A/B: seitliche Führungskante als Montagehilfe
- 17A/B: Schraubkanal M5 zur Befestigung der Querstege und Querbleche
- 18: Transportsicherung
- 19: Aufnahme einer Umkantung des Frontdeckels
- 20: Schraubkanal M5 zur Befestigung der Frontdeckel/Erweiterungsprofile
- 21: durchgehender Schraubkanal M8 zur Befestigung der Kopf- und Fußplatte
- 22: Profilnase zur Arretierung am Grundprofil (5A/B), (14A/B) und (28A/B)
- 23: halbradiusförmig ausgebildete Profilnase zum Einschwenken des Erweiterungsprofils in eine Grundform und zur statisch wirksamen Verbindung der beiden Einzelprofile zu einer Einheit
- 24: Platzerfordernis zum Einschwenken Erweiterungsprofil in Grundprofil
- 25: Systemnut für Nutensteine
- 26A/B: Aufnahme der halbradiusförmig ausgebildeten Profilnase
- 27A/B: Schraubkanal M5 zur Befestigung der Erweiterungsprofile
- 28A/B: Raste zum Arretieren des Erweiterungsprofils
- 29A/B: Schraubkanal M5 zur Befestigung der Querstege und Querbleche
- 30: durchgehender Schraubkanal M8 zu Befestigung der Kopf-und Fußplatte
- 31A/B: Grundprofil M 100 mm
- 32A/B: Systemnut für Nutensteine
- 33: Quersteg oder quer Blech
- 34: Deckel rückseitig
- 35: Deckel frontseitig
- 36 A-D: Schraubbefestigung der Deckel in Schraubkanal M5
- 37A/B: Grundprofil M 100 mm
- 38A/B: Systemnut für Nutensteine
- 39A/B: Erweiterungsprofil 50 mm
- 40: Quersteg oder quer Blech
- 41: Deckel frontseitig
- 42: Deckel rückseitig
- 43A-D: Schraubbefestigung der Deckel in Schraubkanal M5
- 44A/B: Erweiterungsprofil 50 mm
- 45A/B: Grundprofil M 100 mm
- 46A/B: Systemnut für Nutensteine
- 47A/B: Erweiterungsprofil 50 mm
- 48A/B: Querstege oder quer Blech
- 49: Deckel frontseitig
- 50: Deckel frontseitig
- 51A-D: Schraubbefestigung der Deckel in Schraubkanal M5
- 52A/B: Systemnut für Nutensteine
- 53A/B: Grundprofil M 150 mm
- 54A/B: Systemnut für Nutensteine
- 55: Quersteg oder quer Blech
- 56: Deckel rückseitig
- 57: Deckel frontseitig
- 58A-D: Schraubbefestigung der Deckel Schraubkanal M5
- 59A/B: Erweiterungsprofil 50 mm
- 60A/B: Systemnut für Nutensteine
- 61A/B: Grundprofil M 150 mm
- 62A/B: Systemnut für Nutensteine
- 63A/B: Erweiterungsprofil 50 mm
- 64A/B: Quersteg oder Querblech
- 65A/B: Deckel frontseitig
- 66A-D: Schraubbefestigung der Deckel in Schraubkanal M5
- 67A/B: Erweiterungsprofil 50 mm
- 68A/B: Systemnut für Nutensteine
- 69A/B: Erweiterungsprofil 50 mm
- 70A/B: Quersteg oder Querblech
- 71A/B: Deckel frontseitig
- 72A-D: Schraubbefestigung der Deckel in Schraubkanal M5
- 73A/B: Grundprofil M 100 mm unsymmetrisch
- 74: Quersteg oder Querblech
- 75: Deckel frontseitig
- 76: Deckel rückseitig
- 77: Quersteg
- 78A-B: Bohrung für Schraube M5
- 79: verkröpfter bzw. gekröpfter Quersteg
- 80A-B: Bohrung für Schraube M5
- 81: Querprofil
- 82: verkröpftes bzw. gekröpftes Querprofil
- 83: Berührungsschutz hinten
- 84: Berührungsschutz unten oder seitlich
- 85: Frontdeckel (auch mit Aufkantungen seitlich möglich)
- 86A-B: Bohrung für Senkkopfschraube M5
- 87: Kopfplatte 100 mm einseitige Entnahme
- 88A/B: Langloch für M8 zur Befestigung an Grundprofil deckenseitig
- 89: mögliche Abdeckung
- 90A-D: Bohrung für Schraube M8
- 91: Platz für Installationen
- 92: Kopfplatte 100 mm
- 93: Platz für Installationen
- 94A/B: Langloch für M8 zur Befestigung an Grundprofil deckenseitig
- 95AIB: Langloch für M8 zur Befestigung an Grundprofil deckenseitig
- 96A-D: Bohrung für Schraube M8
- 97: Kopfplatte 150 mm
- 98: Platz für Installationen
- 99A/B: Langloch für M8 zur Befestigung an Grundprofil deckenseitig
- 100A/B: Bohrung für Schraube M8
- 101AIB: Erweiterung Kopfplatte
- 102: große schwere Kopfplatte
- 103A/B: Befestigung über Nutensteine in der Nut vom Grundprofil deckenseitig
- 104A/B: Grundprofil deckenseitig
- 105A/B: Erweiterungsprofil 50 mm
- 106A/B: Grundprofil 100 mm oder 150 mm
- 107: Grundprofil deckenseitig
- 108: abgewinkelt Kopfplatte
- 109A-D: vier Laufwagen
- 110: lineare Führungsschiene
- 111: lineare Führungsschiene
- 112: vertikal hängendes, parallel zu Führungsschienen verschiebbares Medienversorgungssystem
- 113AIB: Grundprofil M 100 mm
- 114A/B: Erweiterungsprofil 50 mm
- 115: abgewinkelter Frontdeckel
- 116: Quersteg
- 117: Deckel frontseitig
- 118A/B: Grundprofil M 150 mm
- 119A/B: Erweiterungsprofil 50 mm
- 120: abgewinkelter Frontdeckel
- 121: Quersteg
- 122: Deckel frontseitig
- 123A/B: Grundprofil M 100 mm
- 124: Erweiterungsprofil 50 mm
- 125: abgewinkelter Frontdeckel
- 126: Entnahmestelle
- 127: Quersteg
- 128: Deckel frontseitig
- 129: Armatur bedienseitig
- 130A/B: Grundprofil M 150 mm
- 131: Erweiterungsprofil 50 mm
- 132: abgewinkelter Frontdeckel
- 133: Entnahmestelle
- 134: Quersteg
- 135: Deckel frontseitig
- 136: Armatur bedienseitig

## Patentansprüche

1. Medienversorgungssystem zur Leitungsführung und Entnahme von elektrischen Medien, Sanitärmedien und Gasmedien, welches Im Innern einen Grundkanal ausbildet, welcher sich entlang der Längsrichtung des Medienversorgungssystems erstreckt und eine sich entlang der Längsrichtung erstreckende Frontseite und eine der Frontseite gegenüberliegende, sich entlang der Längsrichtung erstreckende Rückseite aufweist, umfassend:
einen Grundkörper umfassend ein erstes Profil (37A; 45A; 61A) und ein zweites Profil (37B; 45B; 61B), welche sich entlang der Längsrichtung erstrecken, und jeweils ein sich entlang der Längsrichtung erstreckendes frontseitiges Ende und rückseitiges Ende aufweisen, und welche einander gegenüberliegen,
mindestens einen Quersteg (40; 48A, 48B; 64A, 64B),
einen frontseitigen Enddeckel (41; 49; 65A; 115; 120),
einen rückseitigen Enddeckel (42; 50; 65B),
mindestens ein Erweiterungsprofil (39A, 39B; 44A, 44B, 47A, 47B;59A, 59B, 63A, 63B; 114; 119),
wobei das erste Profil (37A; 45A; 61A), das zweite Profil (37B; 45B; 61B), der frontseitige Enddeckel (41; 49; 65A; 115; 120), der rückseitige Enddeckel (42; 50; 65B) und das mindestens eine Erweiterungsprofil (39A, 39B; 44A, 44B, 47A, 47B; 59A, 59B, 63A, 63B; 114; 119) den Grundkanal definieren,
wobei der Quersteg (40; 48A, 48B; 64A, 64B) und das erste Profil (37A; 45A; 61A) und das zweite Profil (37B; 45B; 61B) derart ausgebildet sind, dass der Quersteg (40; 48A, 48B; 64A, 64B) mit dem ersten Profil (37A; 45A; 61A) und dem zweiten Profil (37B; 45B; 61B) verschraubbar ist, so dass der Quersteg das erste Profil (37A; 45A; 61A) und das zweite Profil (37B; 45B; 61B) fest miteinander verbindet,
wobei das erste Profil (37A; 45A; 61A) und das zweite Profil (37B; 45B; 61B) jeweils ein frontseitiges Längsende und ein rückseitiges Längsende aufweisen, welche sich jeweils entlang der Profile in Längsrichtung erstrecken,
wobei das Erweiterungsprofil (39A, 39B; 44A, 44B, 47A, 47B; 59A, 59B, 63A, 63B; 114; 119) ein erstes Längsende, welches sich entlang des Erweiterungsprofils (39A, 39B; 44A, 44B, 47A, 47B; 59A, 59B, 63A, 63B; 114; 119) in Längsrichtung erstreckt, mit einer halbradiusförmig ausgebildeten Einschwenk-Profilnase (23) und mit einer Arretierraste (22), welche sich jeweils entlang des Erweiterungsprofils (39A, 39B; 44A, 44B, 47A, 47B; 59A, 59B, 63A, 63B; 114; 119) in Längsrichtung erstrecken, aufweist,
wobei das Erweiterungsprofil (39A, 39B; 44A, 44B, 47A, 47B; 59A, 59B, 63A, 63B; 114; 119) ein zweites Längsende mit einem Erweiterungsprofil-Schraubkanal zum Verschrauben mit dem frontseitigen Enddeckel (41; 49; 65A; 115; 120) oder mit dem rückseitigen Enddeckel (42; 50; 65B) aufweist, und
wobei das erste Profil (37A; 45A; 61A) und das zweite Profil (37B; 45B; 61B) jeweils am frontseitigen und am rückseitigen Längsende sich jeweils entlang der Profile in Längsrichtung erstreckend eine Aufnahme (2A, 2B; 11A, 11B; 26A, 26B) für die halbradiusförmig ausgebildete Einschwenk-Profilnase, eine Raste (5A, 5B; 14A, 14B; 28A, 28B) zur Arretierung der Arretierraste (22) und einen Profil-Schraubkanal (4A, 4B; 13A, 13B; 27A, 27B) zum Verschrauben mit dem frontseitigen Enddeckel (41; 49; 65A; 115; 120) oder mit dem rückseitigen Enddeckel (42; 50; 65B) oder mit dem Erweiterungsprofil (39A, 39B; 44A, 44B, 47A, 47B; 59A, 59B, 63A, 63B; 114; 119) aufweisen.

2. Medienversorgungssystem nach Anspruch 1, wobei der Grundkörper in seiner Breite verändert werden kann, indem eine Längenanpassung des Querstegs (40; 48A, 48B; 64A, 64B) sowie des frontseitigen Enddeckels (41; 49; 65A; 115; 120) und des rückseitigen Enddeckels (42; 50; 65B) vorgenommen wird.

3. Medienversorgungssystem nach Anspruch 1 oder 2, wobei das Medienversorgungssystem vertikal angeordnbar ist, und dass das Medienversorgungssystem weiterhin eine massive Kopfplatte (87; 92; 102; 103) aufweist, welche dazu eingerichtet ist, den Grundkörper an einem Deckenraster, an einem Tragraster oder an einer Einzelpunktaufhängung zu befestigen.

4. Medienversorgungssystem nach Anspruch 3, wobei die Kopfplatte (108) mit Lagereinheiten und einer Rollenführung ausgestattet ist, wodurch sich das gesamte Medienversorgungssystem in Führungsschienen, welche in ein Tragraster eingesetzt werden können, verschieben lässt.

5. Medienversorgungssystem nach einem der vorstehenden Ansprüche, wobei eine Führung von Zuleitungen in dem Grundkörper entweder in einer einseitigen Entnahmesituation in einem hinteren Bereich erfolgen kann, oder in einer beidseitigen Entnahmesituation mittig unter zwei getrennten Tragprofilen erfolgen kann.

6. Medienversorgungssystem nach einem der vorstehenden Ansprüche, wobei der Grundkörper direkt unter einem Tragprofil eines Deckenrasters oder eines Tragrasters anschließbar ist.

7. Medienversorgungssystem nach einem der vorstehenden Ansprüche, wobei der Grundkörper bei einer einseitigen Anordnung oder bei einer zweiseitigen Anordnung sowie bei einer vertikalen und bei einer horizontalen Doppelentnahmesituation immer symmetrisch bleibt.

8. Medienversorgungssystem nach einem der vorstehenden Ansprüche, wobei ein Erweiterungsprofil (114; 119) mit einem des ersten und zweiten Profils und mit einem frontseitigen Enddeckel (115; 120) verbindbar ist, und dass der frontseitige Enddeckel mit dem anderen des ersten und zweiten Profils verbindbar ist, sodass der Frontdeckel (115; 120) abgeschrägt verläuft.

9. Medienversorgungssystem nach einem der vorstehenden Ansprüche, wobei ein Erweiterungsprofil mit einem des ersten und zweiten Profils und mit einem rückseitigen Enddeckel verbindbar ist, und dass der rückseitige Enddeckel mit dem anderen des ersten und zweiten Profils verbindbar ist, so dass der rückseitige Enddeckel abgeschrägt verläuft.

10. Medienversorgungssystem nach einem der vorstehenden Ansprüche, wobei der Grundkanal als reiner einseitiger oder beidseitiger Elektrokanal ohne einen inneren Berührungsschutz ausgeführt ist.

11. Medienversorgungssystem nach einem der vorstehenden Ansprüche, wobei das Medienversorgungssystem Trennstege aufweist, welche dazu eingerichtet sind, eine Leitungsführung von Medien innerhalb eines Grundkanals innerhalb des Medienversorgungssystems abzuschotten.

12. Medienversorgungssystem nach einem der vorstehenden Ansprüche, wobei die Enddeckel aus Stahl, Aluminium, Kunststoff oder Glas hergestellt sind.

13. Medienversorgungssystem nach einem der vorstehenden Ansprüche, wobei das Medienversorgungssystem Sanitär-und Gasentnahmestellen aufweist, welche einzeln auf einer Mehrzahl von frontseitigen Enddeckeln (41; 49; 65A; 115; 120) montiert sind.

14. Medienversorgungssystem nach einem der vorstehenden Ansprüche, wobei das Medienversorgungssystem dazu eingerichtet ist, in Wandsysteme mit Stärken von 100 mm, 150 mm, 200 mm oder 250 mm eingebaut zu werden.

15. Verwendung eines Medienversorgungssystem nach einem der vorstehenden Ansprüche in einem Labor, entweder als horizontales Medienversorgungssystem oder als vertikales Medienversorgungssystem.

## Claims

1. Media supply system for routing and withdrawing electrical media, plumbing media and gas media, which forms in the interior a base duct, which extends along the longitudinal direction of the media supply system and has a front face extending along the longitudinal direction and a rear face positioned opposite the front face and extending along the longitudinal direction, comprising:
a base body comprising a first profile (37A; 45A; 61A) and a second profile (37B; 45B; 61B), which extend along the longitudinal direction, each have a front end and a rear end extending along the longitudinal direction, and are positioned opposite one another,
at least one cross bar (40; 48A, 48B; 64A, 64B),
a front end cover (41; 49; 65A; 115; 120),
a rear end cover (42; 50; 65B),
at least one continuation profile (39A, 39B; 44A, 44B, 47A, 47B; 59A, 59B, 63A, 63B; 114; 119),
wherein the first profile (37A; 45A; 61A), the second profile (37B; 45B; 61B), the front end cover (41; 49; 65A; 115; 120), the rear end cover (42; 50; 65B) and the at least one continuation profile (39A, 39B; 44A, 44B, 47A, 47B; 59A, 59B, 63A, 63B; 114; 119) define the base duct,
wherein the cross bar (40; 48A, 48B; 64A, 64B) and the first profile (37A; 45A; 61A) and the second profile (37B; 45B; 61B) are formed in such a way that the cross bar (40; 48A, 48B; 64A, 64B) can be screwed to the first profile (37A; 45A; 61A) and second profile (37B; 45B 61B) in such a way that the cross bar rigidly interconnects the first profile (37A; 45A; 61A) and second profile (37B; 45B; 61B),
wherein the first profile (37A; 45A; 61A) and second profile (37B; 45B; 61B) each have a front longitudinal end and rear longitudinal end, which each extend along the profiles in the longitudinal direction,
wherein the continuation profile (39A, 39B; 44A, 44B, 47A, 47B; 59A, 59B, 63A, 63B; 114; 119) has a first longitudinal end which extends along the continuation profile (39A, 39B; 44A, 44B, 47A, 47B; 59A, 59B, 63A, 63B; 114; 119) in the longitudinal direction, comprising a swivel-in profile tab (23) formed as a half-radius and comprising a locking latch (22), which each extend along the continuation profile (39A, 39B; 44A, 44B, 47A, 47B; 59A, 59B, 63A, 63B; 114; 119) in the longitudinal direction,
wherein the continuation profile (39A, 39B; 44A, 44B, 47A, 47B; 59A, 59B, 63A, 63B; 114; 119) has a second longitudinal end comprising a continuation profile screw duct for screwing to the front end cover (41; 49; 65A; 115; 120) or to the rear end cover (42; 50; 65B),
wherein the first profile (37A; 45A; 61A) and the second profile (37B; 45B; 61B) each have, on the front and the rear longitudinal end, in each case extending along the profiles in the longitudinal direction, a recess (2A, 2B; 11A, 11B; 26A, 26B) for the swivel-in profile tab formed as a half-radius, a latch (5A, 5B; 14A, 14B; 28A, 28B) for locking the locking latch (22), and a profile screw duct (4A; 4B; 13A, 13B; 27A, 27B) for screwing to the front end cover (41; 49; 65A; 115; 120) or to the rear end cover (42; 50; 65B) or to the continuation profile (39A, 39B; 44A, 44B, 47A, 47B; 59A, 59B, 63A, 63B; 114; 119).

2. Media supply system according to claim 1, wherein the base body can be altered in width by adapting the lengths of the cross-bar (40; 48A, 48B; 64A, 64B) and of the front end cover (41; 49; 65A; 115; 120) and rear end cover (42; 50; 65B).

3. Media supply system according to either claim 1 or claim 2, wherein the media supply system can be arranged vertically and in that the media supply system further has a solid head plate (87; 92; 102; 103) set up to fix the base body to a ceiling grid, support grid or single-point suspension.

4. Media supply system according to claim 3, wherein the head plate (108) is equipped with storage units and a roller guide, resulting in the entire media supply system being displaceable in guide rails which can be inserted into a support grid.

5. Media supply system according to any of the preceding claims, wherein the supply lines may be guided in the base body either in a rear region, in a one-sided withdrawal situation, or centrally under two separate support profiles, in a two-sided withdrawal situation.

6. Media supply system according to any of the preceding claims, wherein the base body can be connected directly below a support profile of a ceiling grid or support grid.

7. Media supply system according to any of the preceding claims, wherein the base body always remains symmetrical, in a one-sided arrangement or two-sided arrangement as well as in a vertical and horizontal double withdrawal situation.

8. Media supply system according to any of the preceding claims, wherein a continuation profile (114; 119) can be connected to one of the first and second profile and to a front end cover (115; 120), and in that the front end cover can be connected to the other of the first and second profile, in such a way that the front cover (115; 120) extends chamfered.

9. Media supply system according to any of the preceding claims, wherein a continuation profile can be connected to one of the first and second profile and to a rear-face end cover, and in that the rear end cover can be connected to the other of the first and second profile, in such a way that the rear end cover extends chamfered.

10. Media supply system according to any of the preceding claims, wherein the base duct is configured as a pure one-sided or two-sided electrical duct without internal contact protection.

11. Media supply system according to any of the preceding claims, wherein the media supply system comprises separating bars set up to seal off routing of media within a base duct within the media supply system.

12. Media supply system according to any of the preceding claims, wherein the end covers are made from steel, aluminium, plastics material or glass.

13. Media supply system according to any of the preceding claims, wherein the media supply system has plumbing and gas withdrawal points, which are mounted individually on a plurality of front end covers (41; 49; 65A; 115; 120).

14. Media supply system according to any of the preceding claims, wherein the media supply system is set up to be installed in wall systems having thicknesses of 100 mm, 150 mm, 200 mm or 250 mm.

15. Use of a media supply system according to any of the preceding claims in a laboratory, either as a horizontal media supply system or as a vertical media supply system.

## Revendications

1. Système d'alimentation destiné à l'acheminement de lignes et au prélèvement de milieux électriques, milieux sanitaires et milieux gazeux, qui forme à l'intérieur un conduit de base qui s'étend le long de la direction longitudinale du système d'alimentation et qui présente une face avant s'étendant le long de la direction longitudinale et une face arrière opposée à la face avant et s'étendant le long de la direction longitudinale, comprenant :
un corps de base comprenant un premier profilé (37A ; 45A ; 61A) et un second profilé (37B ; 45B ; 61B), qui s'étendent le long de la direction longitudinale et qui présentent respectivement une extrémité avant et une extrémité arrière s'étendant le long de la direction longitudinale, et qui se font face,
au moins une entretoise (40 ; 48A, 48B ; 64A, 64B),
un couvercle d'extrémité avant (41 ; 49 ; 65A ; 115 ; 120),
un couvercle d'extrémité arrière (42 ; 50 ; 65B),
au moins un profilé d'extension (39A, 39B ; 44A, 44B, 47A, 47B ; 59A, 59B, 63A, 63B ; 114 ; 119),
le premier profilé (37A ; 45A ; 61A), le second profilé (37B ; 45B ; 61B), le couvercle d'extrémité avant (41 ; 49 ; 65A ; 115 ; 120), le couvercle d'extrémité arrière (42 ; 50 ; 65B) et l'au moins un profilé d'extension (39A, 39B ; 44A, 44B, 47A, 47B ; 59A, 59B, 63A, 63B ; 114 ; 119) définissant le conduit de base,
l'entretoise (40 ; 48A, 48B ; 64A, 64B) et le premier profilé (37A ; 45A ; 61A) et le second profilé (37B ; 45B ; 61B) étant conçus de telle manière que l'entretoise (40 ; 48A, 48B ; 64A, 64B) peut être vissée au premier profilé (37A ; 45A ; 61A) et au second profilé (37B ; 45B ; 61B) de telle sorte que l'entretoise relie fixement le premier profilé (37A ; 45A ; 61A) et le second profilé (37B ; 45B ; 61B),
le premier profilé (37A ; 45A ; 61A) et le second profilé (37B ; 45B ; 61B) présentant respectivement une extrémité longitudinale avant et une extrémité longitudinale arrière, qui s'étendent respectivement le long des profilés dans la direction longitudinale,
le profilé d'extension (39A, 39B ; 44A, 44B, 47A, 47B ; 59A, 59B, 63A, 63B ; 114 ; 119) présentant une première extrémité longitudinale qui s'étend dans la direction longitudinale le long du profilé d'extension (39A, 39B ; 44A, 44B, 47A, 47B ; 59A, 59B, 63A, 63B ; 114 ; 119), dotée d'un nez de profilé (23) de pivotement vers l'intérieur réalisé en forme de demi-rayon et dotée d'un cran d'arrêt (22), qui s'étendent respectivement dans la direction longitudinale le long du profilé d'extension (39A, 39B ; 44A, 44B, 47A, 47B ; 59A, 59B, 63A, 63B ; 114 ; 119),
le profilé d'extension (39A, 39B ; 44A, 44B, 47A, 47B ; 59A, 59B, 63A, 63B ; 114 ; 119) présentant une seconde extrémité longitudinale dotée d'un canal de vissage de profilé d'extension destiné au vissage avec le couvercle d'extrémité avant (41; 49 ; 65A ; 115 ; 120) ou avec le couvercle d'extrémité arrière (42 ; 50 ; 65B), et
le premier profilé (37A ; 45A ; 61A) et le second profilé (37B ; 45B ; 61B) présentant respectivement sur l'extrémité longitudinale avant et arrière, s'étendant respectivement dans la direction longitudinale le long des profilés, un logement (2A, 2B ; 11A, 11B ; 26A, 26B) pour le nez de profilé de pivotement vers l'intérieur réalisé en forme de demi-rayon, une encoche (5A, 5B ; 14A, 14B ; 28A, 28B) destinée au blocage du cran d'arrêt (22) et un canal de vissage de profilé (4A, 4B ; 13A, 13B ; 27A, 27B) destiné au vissage avec le couvercle d'extrémité avant (41 ; 49 ; 65A ; 115 ; 120) ou avec le couvercle d'extrémité arrière (42 ; 50 ; 65B) ou avec le profilé d'extension (39A, 39B ; 44A, 44B, 47A, 47B ; 59A, 59B, 63A, 63B ; 114 ; 119).

2. Système d'alimentation selon la revendication 1, dans lequel le corps de base peut être modifié en largeur, en effectuant une adaptation de la longueur de l'entretoise (40 ; 48A, 48B ; 64A, 64B) ainsi que du couvercle d'extrémité avant (41 ; 49 ; 65A ; 115 ; 120) et du couvercle d'extrémité arrière (42 ; 50 ; 65B).

3. Système d'alimentation selon la revendication 1 ou 2, ledit système d'alimentation pouvant être agencé verticalement, et en ce que le
système d'alimentation présente en outre une plaque supérieure (87 ; 92 ; 102 ; 103) massive qui est conçue pour fixer le corps de base à une ossature pour plafond suspendu, à une ossature porteuse ou à un point de suspension unique.

4. Système d'alimentation selon la revendication 3, dans lequel la plaque supérieure (108) est équipée d'unités de palier et d'un guidage à galets, moyennant quoi l'ensemble du système d'alimentation peut coulisser dans des rails de guidage qui peuvent être insérés dans une ossature porteuse.

5. Système d'alimentation selon l'une des revendications précédentes, dans lequel un acheminement de lignes d'arrivée dans le corps de base peut être effectué soit, dans une situation de prélèvement unilatérale, dans une zone arrière, soit, dans une situation de prélèvement bilatérale, au centre sous deux profilés porteurs séparés.

6. Système d'alimentation selon l'une des revendications précédentes, dans lequel le corps de base peut être raccordé directement sous un profilé porteur d'une ossature pour plafond suspendu ou d'une ossature porteuse.

7. Système d'alimentation selon l'une des revendications précédentes, dans lequel, dans un agencement unilatéral ou dans un agencement bilatéral ainsi que dans une situation de double prélèvement verticale et horizontale, le corps de base reste toujours symétrique.

8. Système d'alimentation selon l'une des revendications précédentes, dans lequel un profilé d'extension (114 ; 119) peut être relié à l'un du premier et du second profilé et à un couvercle d'extrémité avant (115 ; 120), et en ce que le couvercle d'extrémité avant peut être relié à l'autre du premier et du second profilé, de telle sorte que le couvercle avant (115 ; 120) s'étend en biais.

9. Système d'alimentation selon l'une des revendications précédentes, dans lequel un profilé d'extension peut être relié à l'un du premier et du second profilé et à un couvercle d'extrémité arrière, et en ce que le couvercle d'extrémité arrière peut être relié à l'autre du premier et du second profilé, de telle sorte que le couvercle d'extrémité arrière s'étend en biais.

10. Système d'alimentation selon l'une des revendications précédentes, dans lequel le conduit de base est réalisé sous la forme d'un conduit électrique purement unilatéral ou bilatéral sans protection intérieure contre les contacts accidentels.

11. Système d'alimentation selon l'une des revendications précédentes, le système d'alimentation présentant des séparateurs qui sont conçus pour cloisonner un acheminement de lignes de milieux à l'intérieur d'un conduit de base à l'intérieur du système d'alimentation.

12. Système d'alimentation selon l'une des revendications précédentes, dans lequel les couvercles d'extrémité sont fabriqués en acier, en aluminium, en matière plastique ou en verre.

13. Système d'alimentation selon l'une des revendications précédentes, le système d'alimentation présentant des points de prélèvement sanitaire et de gaz, qui sont montés individuellement sur une pluralité de couvercles d'extrémité avant (41 ; 49 ; 65A ; 115 ; 120).

14. Système d'alimentation selon l'une des revendications précédentes, le système d'alimentation étant conçu pour être installé dans des systèmes de paroi ayant des épaisseurs de 100 mm, 150 mm, 200 mm ou 250 mm.

15. Utilisation d'un système d'alimentation selon l'une des revendications précédentes dans un laboratoire, soit comme système d'alimentation horizontal soit comme système d'alimentation vertical.
